(19) Europäisches Patentamt
European Patent Office
Office européen des brevets

(11) EP 4 517 955 A1

(12) # EUROPEAN PATENT APPLICATION
published in accordance with Art. 153(4) EPC

(43) Date of publication:
**05.03.2025 Bulletin 2025/10**

(21) Application number: **23796560.3**

(22) Date of filing: **28.04.2023**

(51) International Patent Classification (IPC):
***H01M 50/198*** (2021.01) ***H01M 50/105*** (2021.01)
***H01M 50/129*** (2021.01) ***H01M 50/178*** (2021.01)
***H01M 50/184*** (2021.01) ***H01M 50/193*** (2021.01)
***H01M 50/197*** (2021.01)

(52) Cooperative Patent Classification (CPC):
**H01M 50/105; H01M 50/129; H01M 50/178; H01M 50/184; H01M 50/193; H01M 50/197; H01M 50/198;** Y02E 60/10

(86) International application number:
**PCT/JP2023/016974**

(87) International publication number:
**WO 2023/210828 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 JP 2022074304**

(71) Applicant: **Dai Nippon Printing Co., Ltd.**
**Tokyo 162-8001 (JP)**

(72) Inventors:
- **KATOU, Takahiro**
  **Tokyo 162-8001 (JP)**
- **MIZOSHIRI, Makoto**
  **Tokyo 162-8001 (JP)**

(74) Representative: **Müller-Boré & Partner Patentanwälte PartG mbB**
**Friedenheimer Brücke 21**
**80639 München (DE)**

(54) **ADHESIVE FILM FOR METAL TERMINALS AND METHOD FOR PRODUCING SAME, METAL TERMINAL PROVIDED WITH ADHESIVE FILM FOR METAL TERMINALS, OUTER PACKAGE MATERIAL FOR POWER STORAGE DEVICES, KIT COMPRISING OUTER PACKAGE MATERIAL FOR POWER STORAGE DEVICES AND ADHESIVE FILM FOR METAL TERMINALS, AND POWER STORAGE DEVICE AND METHOD FOR PRODUCING SAME**

(57) The present invention provides an adhesive film for metal terminals, the adhesive film being interposed between a metal terminal that is electrically connected to an electrode of a power storage device element and an outer package material for power storage devices, the outer package material sealing the power storage device element. With respect to this adhesive film for metal terminals, a resin layer A that forms at least one surface of this adhesive film for metal terminals contains an acid-modified polyolefin; and after heating this adhesive film for metal terminals at 200°C and 0.25 MPa for 16 seconds, the resin layer A has a crystallinity of 11 or more as determined with use of an X-ray diffractometer under the conditions described below.

(Measurement conditions) · The angle of X-ray irradiation is 0.09° with respect to the surface (0°) of the resin layer A. · The measurement range is from the surface to the depth of 5 μm of the resin layer A. · The camera length of the X-ray detector is 500 mm; the X-ray wavelength is 0.92 Å; and the exposure time is 30 seconds.

EP 4 517 955 A1

## Description

Technical Field

The present disclosure relates to an adhesive film for metal terminal, a method for manufacturing the adhesive film for metal terminal, a metal terminal with an adhesive film for metal terminal, an exterior material for electrical storage devices, a kit including an exterior material for electrical storage devices and an adhesive film for metal terminal, an electrical storage device, and a method for manufacturing the electrical storage device.

Background Art

Various types of electrical storage devices have been developed heretofore, and in every electrical storage device, an exterior material for electrical storage devices is an essential member for sealing electrical storage device elements such as an electrode and an electrolyte. Metallic exterior materials for electrical storage devices have been often used heretofore as exterior materials for electrical storage devices, and in recent years, electrical storage devices have been required to be diversified in shape, and desired to be thinner and lighter as performance of, for example, electric cars, hybrid electric cars, personal computers, cameras and mobile phones has been enhanced. However, metallic exterior materials for electrical storage devices that have often been heretofore used have the disadvantage that it is difficult to keep up with diversification in shape, and there is a limit on weight reduction.

Thus, in recent years, a laminated sheet with a base material layer, an adhesive layer, a barrier layer, and a heat-sealable resin layer laminated in the stated order has been proposed as an exterior material for electrical storage devices which is easily processed into diversified shapes and is capable of achieving thickness reduction and weight reduction. When such a laminated film-shaped exterior material for electrical storage devices is used, an electrical storage device element is sealed with the exterior material for electrical storage devices by heat-sealing the peripheral edge portion of the exterior material for electrical storage devices while the heat-sealable resin layers located at the innermost layer of the exterior material for electrical storage devices are opposed to each other.

A metal terminal protrudes from the heat-sealed portion of the exterior material for electrical storage devices, and the electrical storage device element sealed by the exterior material for electrical storage devices is electrically connected to the outside by a metal terminal electrically connected to an electrode of the electrical storage device element. That is, of the portion where the exterior material for electrical storage devices is heat-sealed, a portion where the metal terminal is present is heat-sealed to the metal terminal is sandwiched between heat-sealable resin layers. Since the metal terminal and the heat-sealable resin layer are composed of different materials, adhesion is likely to decrease at an interface between the metal terminal and the heat-sealable resin layer.

Thus, an adhesive film may be disposed between the metal terminal and the heat-sealable resin layer for the purpose of, for example, improving adhesion between the metal terminal and the heat-sealable resin layer. Examples of the adhesive film include those described in Patent Literature 1.

Citation List

Patent Literature

PTL 1: Japanese Patent Laid-open Publication No. 2015-79638

Summary of Invention

Technical Problem

A main object of the present disclosure is to provide an adhesive film for metal terminal which is interposed between a metal terminal electrically connected to an electrode of an electrical storage device element and an exterior material for electrical storage devices which seals the electrical storage device element, and which is excellent in adhesion to a metal terminal. Another object of the present disclosure is to provide a method for manufacturing the adhesive film for metal terminal, a metal terminal with an adhesive film for metal terminal, an exterior material for electrical storage devices, a kit including an exterior material for electrical storage devices and the adhesive film for metal terminal, an electrical storage device, and a method for manufacturing the electrical storage device.

Solution to Problem

The inventors of the present disclosure have extensively conducted studies for solving the above-described

problems. As a result, the present inventors have found that an adhesive film for metal terminal, which is interposed between a metal terminal electrically connected to an electrode of an electrical storage device element and an exterior material for electrical storage devices which seals the electrical storage device element, and in which a resin layer A forming at least one surface of the film contains an acid-modified polyolefin, and the surface of the resin layer A after the adhesive film for metal terminal is heated at 200°C and 0.25 MPa for 16 seconds has a crystallinity degree of 11 or more as measured under the following conditions using an X-ray diffractometer, is excellent in adhesion of the surface on the resin layer A side to the metal terminal. The present disclosure is an invention that has been completed by further conducting studies based on the above-mentioned findings.

That is, the present disclosure provides an invention of an aspect as described below.

An adhesive film for metal terminal, which is interposed between a metal terminal electrically connected to an electrode of an electrical storage device element and an exterior material for electrical storage devices which seals the electrical storage device element, and in which a resin layer A forming at least one surface of the adhesive film for metal terminal contains an acid-modified polyolefin, and the surface of the resin layer A after the adhesive film for metal terminal is heated at 200°C and 0.25 MPa for 16 seconds has a crystallinity degree of 11 or more as measured under the following conditions using an X-ray diffractometer.

(Measurement conditions)

· The angle of X-ray irradiation is 0.09° with respect to the surface (0°) of the resin layer A.
· The measurement range is 5 μm in depth from the surface of the resin layer A.
· The camera length of an X-ray detector is 500 mm; the X-ray wavelength is 0.92 Å; and the exposure time is 30 seconds.

Advantageous Effects of Invention

According to the present disclosure, it is possible to provide an adhesive film for metal terminal which is interposed between a metal terminal electrically connected to an electrode of an electrical storage device element and an exterior material for electrical storage devices which seals the electrical storage device element, and which is excellent in adhesion to a metal terminal. Another object of the present disclosure is to provide a method for manufacturing the adhesive film for metal terminal, a metal terminal with an adhesive film for metal terminal, an exterior material for electrical storage devices, a kit including an exterior material for electrical storage devices and an adhesive film for metal terminal, an electrical storage device, and a method for manufacturing the electrical storage device.

Brief Description of Drawings

[Fig. 1] Fig. 1 is a schematic plan view of an electrical storage device of the present disclosure.
[Fig. 2] Fig. 2 is a schematic sectional view taken along line A-A' in Fig. 1.
[Fig. 3] Fig. 3 is a schematic sectional view taken along line B-B' in Fig. 1.
[Fig. 4] Fig. 4 is a schematic sectional view of an adhesive film for metal terminal according to the present disclosure.
[Fig. 5] Fig. 5 is a schematic sectional view of an adhesive film for metal terminal according to the present disclosure.
[Fig. 6] Fig. 6 is a schematic sectional view of an adhesive film for metal terminal according to the present disclosure.
[Fig. 7] Fig. 7 is a schematic sectional view of an adhesive film for metal terminal according to the present disclosure.
[Fig. 8] Fig. 8 is a schematic sectional view of an exterior material for electrical storage devices according to the present disclosure.

Description of Embodiments

The adhesive film for metal terminal according to the present disclosure is an adhesive film for metal terminal which is interposed between a metal terminal electrically connected to an electrode of an electrical storage device element and an exterior material for electrical storage devices which seals the electrical storage device element, and in which a resin layer A forming at least one surface of the adhesive film for metal terminal contains an acid-modified polyolefin, and the resin layer A after the adhesive film for metal terminal is heated at 200°C and 0.25 MPa for 16 seconds has a crystallinity degree of 11 or more as measured under the following conditions using an X-ray diffractometer.

(Measurement conditions)

- The angle of X-ray irradiation is 0.09° with respect to the surface (0°) of the resin layer A.
- The measurement range is 5 μm in depth from the surface of the resin layer A.
- The camera length of an X-ray detector is 500 mm; the X-ray wavelength is 0.92 Å; and the exposure time is 30 seconds.

The adhesive film for metal terminal according to the present disclosure has the above-mentioned characteristics, and thus is excellent in adhesion to a metal terminal.

The electrical storage device according to the present disclosure is an electrical storage device including: an electrical storage device element including at least a positive electrode, a negative electrode, and an electrolyte; an exterior material for electrical storage devices which seals the electrical storage device element; and a metal terminal electrically connected to each of the positive electrode and the negative electrode and protruding to the outside of the exterior material for electrical storage devices, in which the adhesive film for metal terminal according to the present disclosure is interposed between the metal terminal and the exterior material for electrical storage devices.

Hereinafter, the adhesive film for metal terminal, the method for manufacturing the adhesive film for metal terminal, the electrical storage device and the method for manufacturing the electrical storage device according to the present disclosure will be described in detail.

For the numerical range in this specification, a numerical range indicated by the term "A to B" means "A or more" and "B or less". For example, the expression of "2 to 15 mm" means 2 mm or more and 15 mm or less. **In** numerical ranges serially described in the present disclosure, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range. In numerical ranges described in the present disclosure, an upper limit value or a lower limit value described for a numerical range may be replaced by a value shown in an example.

## 1. Adhesive film for metal terminal

The adhesive film for metal terminal according to the present disclosure is interposed between a metal terminal electrically connected to an electrode of an electrical storage device element and an exterior material for electrical storage devices for sealing the electrical storage device element. Specifically, as shown in, for example, Figs. 1 to 3, an adhesive film 1 for metal terminal according to the present disclosure is interposed between a metal terminal 2 electrically connected to an electrode of an electrical storage device element 4 and an exterior material 3 for electrical storage devices for sealing the electrical storage device element 4. The metal terminal 2 protrudes to the outside of the exterior material 3 for electrical storage devices, and is sandwiched between the exterior materials 3 for electrical storage devices with the adhesive film 1 for metal terminal at a peripheral edge portion 3a of the heat-sealed exterior material 3 for electrical storage devices.

In the present disclosure, the step of temporarily bonding the adhesive film for metal terminal to a metal terminal is performed under the conditions of a temperature of, for example, about 140 to 160°C, a pressure of about 0.01 to 1.0 MPa, a time of about 3 to 15 seconds, and about 3 to 6 times, and the primary bonding step is performed under the conditions of, for example, a temperature of about 160 to 240°C, a pressure of about 0.01 to 1.0 MPa, a time of about 3 to 15 seconds, and about 1 to 3 times. In heat-sealing performed with the metal terminal with adhesive film for metal terminal interposed in the exterior material for electrical storage devices, the heating temperature is typically in the range of about 180 to 210°C, the pressure is typically about 1.0 to 5.0 MPa, the time is about 1 to 5 seconds, and the number of times of heat-sealing is about 1.

The adhesive film 1 for metal terminal according to the present disclosure is provided for enhancing adhesion between the metal terminal 2 and the exterior material 3 for electrical storage devices. Enhancement of adhesion between the metal terminal 2 and exterior material 3 for electrical storage devices improves the sealing property of the electrical storage device element 4. As described above, the electrical storage device element is sealed such that the metal terminal 2 electrically connected to the electrode of the electrical storage device element 4 protrudes to the outside of the exterior material 3 for electrical storage devices when the electrical storage device element 4 is heat-sealed. Here, the metal terminal 2 formed of metal and a heat-sealable resin layer 35 (a layer formed of a heat-sealable resin such as a polyolefin) located in the innermost layer of the exterior material 3 for electrical storage devices are formed of different materials, and therefore when such an adhesive film is not used, the sealing property of the electrical storage device element is likely to be low at the interface between the metal terminal 2 and the heat-sealable resin layer 35.

[Resin layer A]

The adhesive film 1 for metal terminal according to the present invention includes at least a resin layer A. The resin layer A forms at least one surface of the adhesive film 1 for metal terminal, and is an outermost layer. That is, the adhesive film 1 for metal terminal according to the present disclosure includes at least one resin layer A, and at least one of the surfaces of the adhesive film 1 for metal terminal is formed of the resin layer A. As long as the effect of the present disclosure is exhibited, the adhesive film 1 for metal terminal according to the present disclosure may have a single layer as shown in Fig. 4, or multiple layers as shown in Figs. 5 to 7.

When the adhesive film 1 for metal terminal according to the present disclosure has a single layer, the adhesive film 1 for metal terminal is formed of the resin layer A, and a surface on the metal terminal side and a surface of the exterior material for electrical storage devices are formed of the resin layer A. In this case, the resin for forming a surface of the adhesive film 1 for metal terminal on the side of the exterior material for electrical storage devices and the resin for forming a surface of the adhesive film 1 for metal terminal on the metal terminal side are the same resin (that is, the resin for forming the resin layer A). The phrase "the resin for forming a surface of the adhesive film 1 for metal terminal on the side of the exterior material for electrical storage devices and the resin that forms a surface of the adhesive film 1 for metal terminal on the metal terminal side are the same" means that for example, 80 mass% or more, 90 mass% or more, 95 mass% or more, or 100 mass% of components are identical between these resins.

When the adhesive film 1 for metal terminal according to the present disclosure has multiple layers, at least one layer may be formed of the resin layer A. For example, when the adhesive film 1 for metal terminal according to the present disclosure has a two-layer structure as shown in Fig. 5, the adhesive film 1 for metal terminal is a laminate of a first resin layer 12a and a second resin layer 12b. In the present disclosure, of these layers, the first resin layer 12a is formed of the resin layer A as described later. Even when the adhesive film 1 for metal terminal according to the present disclosure has multiple layers, the resin forming a surface on the side of the exterior material for electrical storage devices and the resin forming a surface on the metal terminal side may be the same resin.

For example, when the adhesive film 1 for metal terminal according to the present disclosure has a three-layer structure as shown in Fig. 6, the adhesive film 1 for metal terminal is a laminate in which the first resin layer 12a, an intermediate layer 11 and the second resin layer 12b are laminated in this order. In the present disclosure, the first resin layer 12a forms a surface on the metal terminal side, and the second resin layer 12b forms a surface on the side of the exterior material for electrical storage devices.

The resin layer A forming the metal terminal-side surface of the adhesive film 1 for metal terminal according to the present disclosure has heat sealability to a metal (a metal forming a metal terminal). Therefore, when the adhesive film 1 for metal terminal according to the present disclosure is used, it is preferable to dispose the resin layer A on the metal terminal side. For this reason, in the present disclosure, of the first resin layer 12a and the second resin layer 12b, the first resin layer 12a is formed of the resin layer A.

A surface of the adhesive film 1 for metal terminal on the side of the exterior material for electrical storage devices (for example, the second resin layer 12b) has heat sealability to a heat-sealable resin layer described later. The resin layer A also has heat sealability to the heat-sealable resin layer described later.

The resin layer A is a layer containing an acid-modified polyolefin. From the viewpoint of more suitably exhibiting the effect of the present disclosure, it is preferable that the resin layer A is formed of an acid-modified polyolefin. That is, the resin layer A can be suitably formed of an acid-modified polyolefin film.

The acid-modified polyolefin is not particularly limited as long as it is a polyolefin modified with an acid, and a polyolefin graft-modified with an unsaturated carboxylic acid or an anhydride thereof is preferable.

Specific examples of the polyolefin to be acid-modified include polyethylenes such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylenes and polypropylene are preferable, with polypropylene being particularly preferable.

The polyolefin modified with an acid may be a cyclic polyolefin. For example, the carboxylic acid-modified cyclic polyolefin is a polymer obtained by performing copolymerization with an $\alpha,\beta$-unsaturated carboxylic acid or an anhydride thereof replacing a part of monomers that form the cyclic polyolefin, or by block-polymerizing or graft-polymerizing an $\alpha,\beta$-unsaturated carboxylic acid or an anhydride thereof with the cyclic polyolefin.

The cyclic polyolefin modified with an acid is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Examples of the carboxylic acid or anhydride thereof which is used for acid modification include maleic acid, acrylic acid, itaconic acid, crotonic acid, maleic anhydride and itaconic anhydride. It is preferable that a peak derived from maleic anhydride is detected when the resin layer A is analyzed by infrared spectroscopy. For example, when a maleic anhydride-modified polyolefin is measured by infrared spectroscopy, peaks derived from maleic anhydride are detected near wavenumbers of 1760 $cm^{-1}$ and 1780 $cm^{-1}$. When the resin layer A is a layer formed from a maleic anhydride-modified polyolefin, a peak derived from maleic anhydride is detected when measurement is performed by infrared spectroscopy. However, if the degree of acid modification is low, the peaks may be too small to be detected. **In** that case, the peaks can be analyzed by nuclear magnetic resonance spectroscopy.

The resin layer A after the adhesive film for metal terminal is heated at 200°C and 0.25 MPa for 16 seconds has a crystallinity degree of 11 or more as measured under the following conditions using an X-ray diffractometer. From the viewpoint of more suitably exhibiting the effect of the present disclosure, the crystallinity degree is preferably about 12 or more, and preferably about 30 or less, more preferably about 20 or less, still more preferably about 15 or less, and is preferably in the range of about 11 to 30, about 11 to 20, about 11 to 15, about 12 to 30, about 12 to 20, or about 12 to 15.

<Measurement of crystallinity degree of resin layer A after heating>

The heating of the adhesive film for metal terminal at 200°C and 0.25 MPa for 16 seconds is performed specifically as follows. The adhesive film for metal terminal is cut to a length of 50 mm and a width of 20 mm. With a polytetrafluoroethylene film (PTFE film, thickness 100 μm) placed on the laminate (with the PTFE film covering a surface of the adhesive film for metal terminal), the laminate is put on a pressing machine heated to 200°C (the resin layer A is on the hot plate side), a silicone sponge sheet is put thereon, and the laminate is left standing at a pressure of 0.25 MPa for 16 seconds to heat the adhesive film. The laminate after heating is naturally cooled to 25°C.

Next, the crystallinity degree of the resin layer A after heating is measured under the following conditions using an X-ray diffractometer (for example, BL8S3 Beamline (trade name) from Aichi Synchrotron Radiation Center).

(Measurement conditions)

- · The angle of X-ray irradiation is 0.09° with respect to the surface (0°) of the resin layer A.
- · The measurement range is 5 μm in depth from the surface of the resin layer A.
- · As an X-ray detector, for example, R-AXIS is used. The camera length is 500 mm; the X-ray wavelength is 0.92 Å; and the exposure time is 30 seconds.

(Analysis of resin layer A)

Using software FI2D for X-ray scattering data analysis, data at azimuth angles of 80 deg to 100 deg is cut out from the spectrum data of a two-dimensional detector, and added up in an azimuth angle direction to obtain a one-dimensional spectrum indicating an intensity value with respect to a diffraction angle 2θ. Further, a straight line extending between two points of 2θ = 4.0 deg and 2θ = 16.0 deg on the one-dimensional spectrum is subtracted as a background. Thereafter, the spectral intensity value A of an amorphous component is defined as A: the smallest of the intensity values in the region of 2θ = 8.8 deg to 9.8 deg, and the crystal peak intensity values P1, P2, P3 and P4 of the four crystal planes are defined as follows.

P1: Intensity value of the peak top of a peak in the region of 2θ = 7.0 deg to 9.2 deg.

P2: Intensity value of the peak top of a peak at 2θ = 9.2 deg to 10.6 deg.

P3: Intensity value of the peak top of a peak at 2θ = 10.6 deg to 12.0 deg.

P4: Intensity value of the peak top of a peak at 2θ = 12.0 deg to 14.0 deg.

The crystallinity degree C is defined as C = (P1+P2+P3+P4)/A, and

The degree of orientation D is defined as D = P2/P4.

Examples of the method for adjusting the crystallinity degree of the resin layer A containing an acid-modified polyolefin after the heating include adjustment of a molding method in formation of the resin layer A (for example, a type of molding method such as an extrusion method or an inflation method, a cooling temperature, a cooling time, a line speed or a clearance) and a resin formulation, selection of a resin type, and a cooling temperature and a cooling time during treatment at 200°C and 0.25 MPa for 16 seconds. For example, on the basis of the fact that selection of slow cooling or a resin having a high density tends to increase the crystallinity degree, and selection of rapid cooling or a resin having a low density tends to decrease the crystallinity degree, the crystallinity degree of the resin layer A after heating is adjusted to fall within the above-described range.

The adhesive film 1 for metal terminal according to the present disclosure, in which the crystallinity degree of the

resin layer A containing an acid-modified polyolefin and forming at least one surface of the adhesive film 1 for metal terminal is set to a high value of 11 or more, thus can exhibit excellent adhesion to a metal terminal. The reason for this can be considered as follows. That is, the heating conditions (200°C, 0.25 MPa, 16 seconds) before measurement of the crystallinity degree of the resin layer A are heating conditions under which the resin layer A is heat-sealed to the metal terminal. It can be considered that since the crystallinity degree of the resin layer A after heating is set to a high value, the surface portion of the resin layer A which is in close contact with the metal terminal after heating has appropriate crystallinity, and appropriately follows the shape of the metal terminal (in other words, not too hard but not too soft), resulting in exhibition of excellent adhesion to the metal terminal. Further, since the crystallinity degree of the resin layer A after heating is set in the specific range, it is also possible to suitably increase the sealing strength in the case of immersion in an electrolytic solution ("Sealing strength to metal terminal (after immersion in electrolytic solution)" described later). The reason for this can be considered as follows. That is, since the crystallinity degree of the resin layer A after heating is set in the specific range, the surface portion of the resin layer A which is in close contact with the metal terminal after heating has appropriate crystallinity, and thus appropriately follows the shape of the metal terminal (in other words, not too hard but not too soft), gaps are hardly generated between the resin layer A after heating and the metal terminal, so that an electrolytic solution is unlikely to enter the interface between the resin layer A and the metal terminal. It can be considered that the sealing strength in the case of immersion in an electrolytic solution is suitably increased.

From the viewpoint of more suitably exhibiting the effect of the present disclosure, the degree of uneven distribution of proportions of island portions in the sea-island structure, in the resin layer A after the heating, is preferably about 2.0 or less, more preferably about 1.5 or less, more preferably about 1.0 or less, with the lower limit being most preferably 0, and the degree of uneven distribution is preferably in the range of 0 to 2.0, 0 to 1.5, 0 to 1.0, 0 to 0.8, 0 to 0.5, or 0 to 0.3. When the degree of uneven distribution of proportions of island portions in the resin layer A after the heating is about 2.0 or less, preferably about 1.5 or less, more preferably about 1.0 or less, still more preferably about 0.8 or less, still more preferably 0.5 or less, still more preferably 0.3, it is possible to suitably increase the sealing strength in the case where the adhesive film 1 for metal terminal is immersed in an electrolytic solution after being sealed to a metal terminal ("Sealing strength to metal terminal (after immersion in electrolytic solution)" described later). The degree of uneven distribution of proportions of island portions is a value measured by the following method.

<Measurement of degree of uneven distribution of proportion of island portions in resin layer A after heating>

[Pretreatment conditions]

- A sample is cut into a strip shape, and embedded in a thermosetting resin (50°C, 24 hr).
- Trimming is performed, followed by staining with Ru
- A cross-section is prepared using ultramicrotome (with a diamond knife; finished thickness: 80 nm)
- Os coating (1 to 3 nm)

[SEM observation conditions]

- Measuring apparatus: commercially available SEM (for example, S-4800 TYPE II manufactured by Hitachi High-Tech Corporation)
- Acceleration voltage: 5.0 kV
- Emission current: 20 μA
- W.D: 5 mm
- Detector: Upper + H.A
- Measuring magnification: 10k
- Resolution: 256 dpi

[Image processing conditions]

The following image processing is performed on an electron microscope image to obtain a binarized image.

OpenCV, which is an image processing library of Python, can be used in the image processing. The image processing conditions are described below.

1. Gaussian filter (kernel size 5px × 5px).

2. The measurement image is enlarged longitudinally and laterally by 8 times (complement method = CUBIC).
3. Noises are removed using a fastNlMeansDenoising function (Background color = black, parameters of the fastNlMeansDenoising function are as follows: h = 10, hForColorComponents = 10, templateWindowSize = 7 and searchWindowSize = 21).
4. The binarization is performed such that the light portion is white and the dark portion is black (threshold = threshold of Otsu).
5. Morphological transformation - Open processing (kernel size = 45px × 15px).
6. Noise removal (removal of black portions having an area of 625px^2 or less).
7. Noise removal (removal of white portions having an area of 75px^2 or less).
8. Noise removal (removal of black portions having an area of 10000px^2 or less).
9. Morphological transformation - Open processing (kernel size = 65px × 25px).
10. Morphological transformation - CLOSE processing (kernel size = 25px × 1px).

504px × 504px (corresponding to an angle of view of 1 μm × 1 μm) is cut out from the obtained binarized image, and the proportion of white portions in the relevant region is defined as W (%).
Arbitrary 40 portions are cut out, and used to calculate the proportion of white portions, and a value obtained by dividing the standard deviation of W in the 40 portions by the average value of W in the 40 portions is defined as a degree of uneven distribution L of the sea-island structure.
Examples of the method for adjusting the degree of uneven distribution of proportions of island portions in the resin layer A containing an acid-modified polyolefin after the heating include adjustment of a molding method (for example, a type of molding method such as an extrusion method or an inflation method, a cooling temperature, a cooling time or a line speed) and a resin formulation in formation of the resin layer A. For example, on the basis of the fact that there is a tendency that uneven distribution of proportions of island portions is likely to occur when rapid cooling is performed, the line speed is increased, and the amount of components forming the island portions of the resin is increased, and uneven distribution of proportions of island portions is unlikely to occur when slow cooling is performed, the line speed is decreased, and the amount of components forming the island portions of the resin is decreased, an adjustment is made such that the degree of uneven distribution of the proportion of island portions in the resin layer A after heating decreases.
In the adhesive film 1 for metal terminal according to the present disclosure, when the crystallinity degree of the resin layer A after the heating is 11 or more, and the degree of uneven distribution of proportions of island portions in the sea-island structure of the resin layer A after the heating which contains an acid-modified polyolefin and forms at least one surface of the adhesive film 1 for metal terminal is about 0.5 or less, it is also possible to further suitably increase the sealing strength in the case of immersion in an electrolytic solution ("Sealing strength to metal terminal (after immersion in electrolytic solution)" described later). The reason for this can be considered as follows. That is, the island portion of the resin layer A is such that the sea portion and the island portion are typically formed of different resins, and for example, when the resin layer A is formed of acid-modified polypropylene (whose cross-section has a resin sea-island structure), the sea portion is typically formed of an acid-modified polypropylene component, and the island portion is typically formed of a polyethylene component. The polyethylene part of the island portion has a density smaller than that of the acid-modified polypropylene part of the sea portion, and is different from the sea portion in volume expansion coefficient, viscosity, electrolytic solution swellability, and the like. Therefore, if uneven distribution of island portions on a cross-section of the resin layer A after the heating is large, characteristics in the case where an electrolytic solution permeates the resin layer A after the heating are unevenly distributed, so that the mechanical strength of the resin layer A after heating is likely to decrease. In the present disclosure, setting of the degree of uneven distribution of proportions of island portions in the sea-island structure of the resin layer A after the heating to about 0.5 or less may lead to little uneven distribution on a cross-section of the resin layer A after the heating, and an increase in sealing strength in the case of immersion in an electrolytic solution.
From the viewpoint of more suitably exhibiting the effect of the present disclosure, the degree of orientation, in the resin layer A after heating, is preferably about 1.0 or more, more preferably about 1.1 or more, still more preferably about 1.2 or more, still more preferably about 1.3 or more, with the upper limit being preferably 2.0, and the degree of orientation is preferably in the range of about 1.0 to 2.0, about 1.1 to 2.0, about 1.2 to 2.0, or about 1.3 to 2.0. When the degree of orientation of the resin layer A after heating is about 1.2 or more, it is possible to suitably increase the sealing strength in the case where the adhesive film 1 for metal terminal according to the present disclosure is immersed in an electrolytic solution after being sealed to a metal terminal ("Sealing strength to metal terminal (after immersion in electrolytic solution)" described later). The degree of orientation is a value measured by the following method.

<Measurement of degree of orientation of resin layer A after heating>

Using an X-ray diffractometer (for example, BL8S3 Beamline (trade name) from Aichi Synchrotron Radiation Center), the crystallinity degree is measured under the following conditions.

(Measurement conditions: resin layer A)

- · The angle of X-ray irradiation is 0.09° with respect to the surface (0°) of the resin layer A.
- · The measurement range is 5 μm in depth from the surface of the resin layer A.
- · As an X-ray detector, for example, R-AXIS is used. The camera length is 500 mm; the X-ray wavelength is 0.92 Å; and the exposure time is 30 seconds.

(Analysis of resin layer A)

Using software FI2D for X-ray scattering data analysis, data at azimuth angles of 80 deg to 100 deg is cut out from the spectrum data of a two-dimensional detector, and added up in an azimuth angle direction to obtain a one-dimensional spectrum indicating an intensity value with respect to a diffraction angle 2θ. Further, a straight line extending between two points of 2θ = 4.0 deg and 2θ = 16.0 deg on the one-dimensional spectrum is subtracted as a background. Thereafter, the spectral intensity value A of an amorphous component is defined as A: the smallest of the intensity values in the region of 2θ = 8.8 deg to 9.8 deg, and the crystal peak intensity values P1, P2, P3 and P4 of the four crystal planes are defined as follows.
P1: Intensity value of the peak top of a peak in the region of 2θ = 7.0 deg to 9.2 deg.
P2: Intensity value of the peak top of a peak at 2θ = 9.2 deg to 10.6 deg.
P3: Intensity value of the peak top of a peak at 2θ = 10.6 deg to 12.0 deg.
P4: Intensity value of the peak top of a peak at 2θ = 12.0 deg to 14.0 deg.
The crystallinity degree C is defined as C = (P1+P2+P3+P4)/A, and
The degree of orientation D is defined as D = P2/P4.
The resin layer A may be formed from one resin component alone, or may be formed from a blend polymer obtained by combining two or more resin components. From the viewpoint of film formability, it is preferable to form the resin layer A from a blend polymer obtained by combining two or more resin components. When formed from the blend polymer, it is preferable that the resin layer A contains acid-modified polypropylene as a main component (the content of the component is 50 mass% or more), and other resins in an amount of 50 mass% or less (preferably polyethylene from the viewpoint of improving flexibility). On the other hand, from the viewpoint of the electrolytic solution resistance of the resin layer A, it is preferable that the resin layer A contains acid-modified polypropylene alone as a resin.
The resin layer A may contain known additives as necessary.
For example, the resin layer A may contain a filler as necessary. When the resin layer A contains a filler, a short circuit between the metal terminal 2 and a barrier layer 33 of the exterior material 3 for electrical storage devices can be effectively suppressed because the filler functions as a spacer. The particle size of the filler is in the range of about 0.1 to 35 μm, preferably about 5.0 to 30 μm, more preferably about 10 to 25 μm. The content of the filler based on 100 parts by mass of resin components forming the resin layer A is about 5 to 30 parts by mass, more preferably about 10 to 20 parts by mass.
As the filler, either an inorganic filler or an organic filler can be used. Examples of the inorganic filler include carbon (carbon, graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide and calcium carbonate. In addition, examples of the organic filler include fluororesins, phenol resins, urea resins, epoxy resins, acrylic resins, benzoguanamine-formaldehyde condensates, melamine-formaldehyde condensates, crosslinked products of polymethyl methacrylate, and crosslinked products of polyethylene. From the viewpoint of shape stability, rigidity and content resistance, aluminum oxide, silica, fluororesins, acrylic resins and benzoguanamine-formaldehyde condensates are preferable, and among them, spherical aluminum oxide and silica are more preferable. As a method for mixing the filler with resin components that form the resin layer A, a method in which a masterbatch formed by melting and blending the resin components and the filler with a Banbury mixer or the like is adjusted to a predetermined mixing ratio; a method in which the filler is directly mixed with the resin components; or the like can be adopted.
The resin layer A may contain a pigment as necessary. As the pigment, various inorganic pigments can be used. As a specific example of the pigment, carbon (carbon, graphite) exemplified as the filler can be preferably exemplified. Carbon (carbon, graphite) is a material generally used inside an electrical storage device, and there is no possibility of being dissolved in an electrolytic solution. In addition, the carbon has a high coloring effect, allows a sufficient coloring effect to be obtained with an addition amount small enough not to hinder bondability, is not melted by heat, and is capable of increasing the apparent melt viscosity of the resin added. Further, it is possible to impart an excellent sealing property between the exterior material for electrical storage devices and the metal terminal by preventing a pressed portion from being thinned during thermal bonding (heat-sealing).
When a pigment is added to the resin layer A, for example, the addition amount of the pigment based on 100 parts by mass of resin components for forming the resin layer A is about 0.05 to 0.3 parts by mass, preferably about 0.1 to 0.2

parts by mass, when carbon black having a particle size of about 0.03 μm is used. By adding a pigment to the resin layer A, the presence or absence of the adhesive film 1 for metal terminal can be detected by a sensor, or can be visually inspected. When a filler and a pigment are added to the resin layer A, the filler and the pigment may be added to one resin layer A, but from the viewpoint of preventing impairment of the heat-sealing property of the adhesive film 1 for metal terminal, it is preferable to add the filler and the pigment to different layers, respectively (for example, the first resin layer 12a, the second resin layer 12b and the intermediate layer 11 described above).

From the viewpoint of more suitably exhibiting the effect of the present disclosure, the melting peak temperature of the resin layer A is preferably 125°C or higher, more preferably about 130°C or higher, still more preferably about 135°C or higher. From the same viewpoint, the melting peak temperature is, for example, 180°C or lower, preferably 175°C or lower, more preferably 170°C or lower, still more preferably about 165°C or lower, still more preferably about 160°C or lower. The melting peak temperature is preferably in the range of about 125 to 180°C, about 125 to 175°C, about 125 to 170°C, about 125 to 165°C, about 125 to 160°C, about 130 to 180°C, about 130 to 175°C, about 130 to 170°C, about 130 to 165°C, about 130 to 160°C, about 135 to 180°C, about 135 to 175°C, about 135 to 170°C, about 135 to 165°C, or about 135 to 160°C. In the present disclosure, a method for measuring the melting peak temperature is as follows.

<Measurement of melting peak temperature>

For each measurement sample, the melting peak temperature is measured in accordance with the provisions of JIS K 7121: 2012 (Testing Methods for Transition Temperatures of Plastics (Amendment 1 of JIS K 7121: 1987)). The measurement is performed with a differential scanning calorimeter (DSC, for example, Differential Scanning Calorimeter Q200 manufactured by TA Instruments). The measurement sample is held at -50°C for 15 minutes, then heated from -50°C to 210°C at a temperature rise rate of 10°C/min to measure the first melting peak temperature P (°C), and then held at 210°C for 10 minutes. Next, the measurement sample is cooled from 210°C to -50°C at a temperature lowering rate of 10°C/min, and held for 15 minutes. Further, the second melting peak temperature Q (°C) is measured by heating the measurement sample from -50°C to 210°C at a temperature rise rate of 10°C/min. The flow rate of the nitrogen gas is set to 50 ml/min. In accordance with the above procedure, the first measured melting peak temperature P (°C) and the second measured melting peak temperature Q (°C) are determined. In accordance with the above procedure, the value of the first measured melting peak temperature P (°C) is adopted.

When the adhesive film 1 for metal terminal according to the present disclosure is composed of a single layer of the resin layer A, the total thickness of the adhesive film 1 for metal terminal which is described later corresponds to the thickness of the resin layer A.

When the adhesive film 1 for metal terminal according to the present disclosure includes multiple layers, the thickness of the resin layer A is preferably about 10 μm or more, more preferably about 15 μm or more, still more preferably about 20 μm or more, and preferably about 120 μm or less, more preferably about 100 μm or less, still more preferably about 80 μm or less, from the viewpoint of more suitably exhibiting the effect of the present disclosure. The thickness of the resin layer A is preferably in the range of about 10 to 120 μm, about 10 to 100 μm, about 10 to 80 μm, about 15 to 120 μm, about 15 to 100 μm, about 15 to 80 μm, about 20 to 120 μm, about 20 to 100 μm, or about 20 to 80 μm. From the viewpoint of enhancing the insulation quality of the adhesive film for metal terminal, the thickness of the resin layer A is preferably about 55 μm or more, more preferably about 60 μm or more, and preferably about 100 μm or less, more preferably about 90 μm or less, and is preferably in the range of about 55 to 100 μm, about 55 to 90 μm, about 60 to 100 μm, or about 60 to 90 μm. When the adhesive film 1 for metal terminal according to the present disclosure includes a plurality of resin layers A, the thickness of each of the resin layers A is preferably a thickness as described above.

As described above, the adhesive film 1 for metal terminal according to the present disclosure may have a configuration in which at least the first resin layer 12a, the intermediate layer 11 and the second resin layer 12b are laminated in the stated order as shown in Fig. 6. In the configuration, the first resin layer 12a is disposed on the metal terminal 2 side, and therefore at least the first resin layer 12a is the resin layer A. The second resin layer 12b is disposed on the side of the exterior material 3 for electrical storage devices. In the configuration, the first resin layer 12a and the second resin layer 12b are located on both the surfaces, respectively.

The second resin layer 12b is a layer formed of resin. The second resin layer 12b may be formed of the resin layer A, or may be formed of the resin layer B that is different from the resin layer A (i.e., the resin layer B is a resin layer that is free of an acid-modified polyolefin, or a resin layer that contains an acid-modified polyolefin and has a crystallinity degree of less than 11 as measured under the above conditions using an X-ray diffractometer).

The intermediate layer 11 may also be formed of the resin layer A, or may be formed of the resin layer B that is different from the resin layer A.

[Resin layer B]

Examples of the resin that forms the resin layer B include polyolefin-based resins, polyamide-based resins,

polyester-based resins, epoxy resins, acrylic resins, fluororesins, silicone resins, phenol resins, silicon resins, polyurethane resins, polyether imide, polycarbonate, and mixtures and copolymers thereof. Among them, polyolefin-based resins are particularly preferable. Examples of the polyolefin-based resin include polyolefins and acid-modified polyolefins.

As described later, it is preferable that the second resin layer 12b contains a polyolefin-based resin (the intermediate layer 11 has a polyolefin backbone), more preferably a polyolefin, and it is still more preferable that the second resin layer 12b is formed of a polyolefin. It is preferable that the second resin layer 12b contains a polyolefin or an acid-modified polyolefin, more preferably a polyolefin, among polyolefin-based resins, and it is still more preferable that the second resin layer 12b is a layer formed of a polyolefin.

It is preferable that the intermediate layer 11 contains a polyolefin-based resin (the intermediate layer 11 has a polyolefin backbone), more preferably a polyolefin, and it is still more preferable that the intermediate layer 11 is formed of a polyolefin.

In each of the resin layers B that are used for the second resin layer 12b and the intermediate layer 11, the polyolefin-based resin is preferably a polypropylene-based resin. The polyolefin is preferably polypropylene, and the acid-modified polyolefin is preferably acid-modified polypropylene.

The resin layer B may be formed from one resin component alone, or may be formed from a blend polymer obtained by combining two or more resin components. From the viewpoint of film formability, it is preferable to form the resin layer B from a blend polymer obtained by combining two or more resin components. When formed from the blend polymer, it is preferable that the resin layer B containing an acid-modified polyolefin contains acid-modified polypropylene as a main component (the content of the component is 50 mass% or more), and other resins in an amount of 50 mass% or less (preferably polyethylene from the viewpoint of improving flexibility). In addition, it is preferable that the resin layer B containing polypropylene contains polypropylene as a main component (component contained at 50 mass% or more), and other resins at 50 mass% or less (polyethylene is preferable from the viewpoint of improving flexibility). On the other hand, from the viewpoint of the electrolytic solution resistance of the resin layer B, it is preferable that the resin layer B containing acid-modified polypropylene contains acid-modified polypropylene alone as a resin, and it is preferable that the resin layer B containing polypropylene contains acid-modified polypropylene or polypropylene alone as a resin.

As the resin forming the resin layer B, the polyester-based resin contains a polyester structure such as polyethylene terephthalate or polybutylene terephthalate. The resin may further contain a polyether structure in addition to the polyethylene terephthalate structure or the polybutylene terephthalate structure, with the polyether structure having a polycondensation structure of at least one of polytetramethylene ether glycol and neopentyl glycol and terephthalic acid of the polybutylene terephthalate structure. In addition, the resin may further contain, in addition to the polyethylene terephthalate structure or the polybutylene terephthalate structure, another polyester structure, with the polyester structure having a polycondensation structure of at least one selected from the group consisting of isophthalic acid, dodecanedionic acid and sebacic acid and 1,4-butanediol of the polybutylene terephthalate structure.

The melting peak temperature of the resin layer B is preferably 125°C or higher, more preferably about 130°C or higher, still more preferably about 135°C or higher. The melting peak temperature is, for example, 180°C or lower, preferably 175°C or lower, more preferably 170°C or lower, still more preferably about 165°C or lower, still more preferably about 160°C or lower. The melting peak temperature is preferably in the range of about 125 to 180°C, about 125 to 175°C, about 125 to 170°C, about 125 to 165°C, about 125 to 160°C, about 130 to 180°C, about 130 to 175°C, about 130 to 170°C, about 130 to 165°C, about 130 to 160°C, about 135 to 180°C, about 135 to 175°C, about 135 to 170°C, about 135 to 165°C, or about 135 to 160°C.

When the adhesive film 1 for metal terminal according to the present disclosure includes the resin layer B as the second resin layer 12b, the thickness of the resin layer B is preferably about 10 μm or more, more preferably about 15 μm or more, still more preferably about 20 μm or more, and preferably about 120 μm or less, more preferably about 100 μm or less, still more preferably about 80 μm or less, from the viewpoint of more suitably exhibiting the effect of the present disclosure. The thickness of the resin layer B is preferably in the range of about 10 to 120 μm, about 10 to 100 μm, about 10 to 80 μm, about 15 to 120 μm, about 15 to 100 μm, about 15 to 80 μm, about 20 to 120 μm, about 20 to 100 μm, or about 20 to 80 μm.

When the adhesive film 1 for metal terminal according to the present disclosure includes the resin layer B as the intermediate layer 11, the thickness of the resin layer B is preferably about 10 μm or more, more preferably about 20 μm or more, still more preferably about 30 μm or more, and preferably about 120 μm or less, more preferably about 110 μm or less, still more preferably about 100 μm or less, from the viewpoint of more suitably exhibiting the effect of the present disclosure. The thickness of the resin layer B is preferably in the range of about 10 to 120 μm, about 10 to 110 μm, about 10 to 100 μm, about 20 to 120 μm, about 20 to 110 μm, about 20 to 100 μm, about 30 to 120 μm, about 30 to 110 μm, or about 30 to 100 μm.

Like the resin layer A, the resin layer B may contain known additives (the above-described fillers and pigments, and the like). The type and added amount of the filler and the pigment are the same as in the case of the resin layer A.

From the viewpoint of more suitably exhibiting the effect of the present disclosure, the total thickness of the

adhesive film 1 for metal terminal according to the present disclosure is, for example, about 50 μm or more, preferably about 80 μm or more, preferably about 90 μm or more, more preferably about 100 μm or more, still more preferably about 180 μm or more. In addition, the total thickness of the adhesive film 1 for metal terminal according to the present disclosure is preferably about 500 μm or less, about 300 μm or less, more preferably about 250 μm or less, still more preferably about 200 μm or less. The total thickness of the adhesive film 1 for metal terminal according to the present disclosure is preferably in the range of about 50 to 500 μm, about 50 to 300 μm, about 50 to 250 μm, about 50 to 200 μm, about 80 to 500 μm, about 80 to 300 μm, about 80 to 250 μm, about 80 to 200 μm, about 90 to 500 μm, about 90 to 300 μm, about 90 to 250 μm, about 90 to 200 μm, about 100 to 500 μm, about 100 to 300 μm, about 100 to 250 μm, about 100 to 200 μm, about 180 to 500 μm, about 180 to 300 μm, about 180 to 250 μm, or about 180 to 200 μm. As a more specific example, for example, the adhesive film 1 for metal terminal according to the present disclosure preferably has a total thickness of about 60 to 100 μm when used for relatively small electrical storage devices for mobile phones, smartphones or tablets, and preferably has a total thickness of about 100 to 200 μm when used for large electrical storage devices for electrical power storage systems or in-vehicle uses.

In the adhesive film 1 for metal terminal according to the present disclosure, the sealing strength to a metal terminal (initial) which is measured by the following method is preferably about 20 N/15 mm or more, more preferably about 25 N/15 mm or more, still more preferably about 30 N/15 mm or more. The upper limit of the sealing strength (initial) is typically about 80 N/15 mm or less. The sealing strength is preferably in the range of about 20 to 80 N/15 mm, about 25 to 80 N/15 mm, or about 30 to 80 N/15 mm.

<Measurement of sealing strength to metal terminal (initial)>

As a metal terminal, aluminum (JIS H 4160: 1994 A 8079 H-O) having a length of 50 mm, a width of 22.5 mm and a thickness of 0.4 mm is provided. The adhesive film for metal terminal is cut to a length of 45 mm and a width of 10 mm. Next, the adhesive film for metal terminal is placed on the metal terminal to obtain a laminate of a metal terminal and an adhesive film. Here, the lamination is performed in such a manner that the longitudinal direction and the lateral direction of the metal terminal coincide with the length direction and the width direction of the adhesive film for metal terminal, respectively, and the centers of the metal terminal and the adhesive film for metal terminal coincide with each other. In addition, the resin layer A of the adhesive film for metal terminal is disposed on the metal terminal side. Next, with a polytetrafluoroethylene film (PTFE film, thickness 100 μm) placed on the adhesive film for metal terminal of the laminate (with the PTFE film covering a surface of the adhesive film for metal terminal), the laminate is put on a pressing machine heated to 200°C (the metal terminal is on the hot plate side), a silicone sponge sheet is put thereon, and the laminate is left standing at a pressure of 0.25 MPa for 16 seconds to heat-seal the adhesive film to the metal terminal. The laminate after the heat-welding is naturally cooled to 25°C. Next, the adhesive film for metal terminal is peeled off from the metal terminal in an environment at 25°C using Tensilon Versatile Material Tester (for example, RTG-1210 manufactured by A&D Company, Limited). The maximum strength during the peeling is defined as adhesion strength to the metal terminal (N/15 mm). The peeling speed is 50 mm/min, the peeling angle was 180 °, and the distance between chucks is 30 mm. An average of the values of three measurements is adopted. The treatment in which the laminate is left standing for 16 seconds in a heating and pressurizing environment at a temperature of 200°C and a surface pressure of 0.25 MPa simulates heat and pressure applied in the temporary bonding step and the primary bonding step.

In the adhesive film 1 for metal terminal according to the present disclosure, the sealing strength to a metal terminal (after immersion in electrolytic solution) which is measured by the following method is preferably about 15 N/15 mm or more, more preferably about 20 N/15 mm or more, still more preferably about 25 N/15 mm or more. The upper limit of the sealing strength (after immersion in electrolytic solution) is typically about 50 N/15 mm or less. The sealing strength is preferably in the range of about 15 to 50 N/15 mm, about 20 to 50 N/15 mm, or about 25 to 50 N/15 mm.

<Measurement of sealing strength to metal terminal (after immersion in electrolytic solution)>

As a metal terminal, aluminum (JIS H 4160: 1994 A 8079 H-O) having a length of 50 mm, a width of 22.5 mm and a thickness of 0.4 mm is provided. The adhesive film for metal terminal is cut to a length of 45 mm and a width of 10 mm. Next, the adhesive film for metal terminal is placed on the metal terminal to obtain a laminate of a metal terminal and an adhesive film. Here, the lamination is performed in such a manner that the longitudinal direction and the lateral direction of the metal terminal coincide with the length direction and the width direction of the adhesive film for metal terminal, respectively, and the centers of the metal terminal and the adhesive film for metal terminal coincide with each other. In addition, the resin layer A of the adhesive film for metal terminal is disposed on the metal terminal side. Next, with a polytetrafluoroethylene film (PTFE film, thickness 100 μm) placed on the adhesive film for metal terminal of the laminate (with the ETFE film covering a surface of the adhesive film for metal terminal), the laminate is put on a pressing machine heated to 200°C (the metal terminal is on the hot plate side), a silicone sponge sheet is put thereon, and the laminate is left standing at a pressure of 0.25 MPa for 16 seconds to heat-seal the adhesive film to the metal terminal. The laminate after the heat-welding is

naturally cooled to 25°C. Next, the obtained laminate is put in a 100 mL plastic bottle, and 100 g of an electrolytic solution (EC (ethylene carbonate)/DMC (dimethyl carbonate)/DEC (diethyl carbonate) = 1 : 1 : 1) and 1000ppm of pure water are mixed in the plastic bottle, which is tightly sealed. The sealed container is put in an oven at 85°C, taken out after 24 hours, the electrolytic solution is washed off with water, and the obtained laminate is left standing for 30 minutes for natural drying. Next, the adhesive film for metal terminal is peeled off from the metal terminal in an environment at 25°C using Tensilon Versatile Material Tester (for example, RTG-1210 manufactured by A&D Company, Limited). The maximum strength during the peeling is defined as adhesion strength to the metal terminal (N/15 mm). The peeling speed is 50 mm/min, the peeling angle was 180 °, and the distance between chucks is 30 mm. An average of the values of three measurements is adopted. The treatment in which the laminate is left standing for 16 seconds in a heating and pressurizing environment at a temperature of 200°C and a surface pressure of 0.25 MPa simulates heat and pressure applied in the temporary bonding step and the primary bonding step.

It is preferable that the adhesive film for metal terminal according to the present disclosure has fine irregularities on at least one surface of the outermost layer. This enables further improvement of adhesion to the heat-sealable resin layer 35 of the exterior material for electrical storage devices or the metal terminal. Examples of the method for forming fine irregularities on the surface of an outermost layer of the adhesive film for metal terminal include a method in which an additive such as fine particles is added to the outermost layer; and a method in which a cooling roll having irregularities on a surface thereof is abutted against a surface of the heat-sealable resin layer to give a shape. The fine irregularities are those in which the ten-point average roughness of the surface of the outermost layer is preferably about 0.1 μm or more, more preferably about 0.2 μm or more, and preferably about 35 μm or less, more preferably about 10 μm or less, and is preferably in the range of about 0.1 to 35 μm, about 0.1 to 10 μm, about 0.2 to 35 μm, about 0.2 to 35 μm, or about 0.2 to 10 μm. The ten-point average roughness is a value obtained by performing measurement with a small surface roughness measuring machine SURFTEST SJ-210 manufactured by Mitutoyo Corporation by a method conforming to the provisions of JIS B0601: 1994.

It is preferable that the adhesive film 1 for metal terminal according to the present disclosure is formed of a polyolefin-based resin. For example, it is preferable that the resin component contained in the adhesive film 1 for metal terminal according to the present disclosure consists only of an acid-modified polyolefin or an acid-modified polyolefin and a polyolefin. Preferred acid-modified polyolefins and polyolefins are as described for the resin layer A and the resin layer B.

It is preferable that the adhesive film 1 for metal terminal according to the present disclosure includes a laminate including the first resin layer 12a, the intermediate layer 11 and the second resin layer 12b in the stated order. Hereinafter, a preferred aspect of the adhesive film 1 for metal terminal according to the present disclosure will be described in detail by taking as an example a case where the adhesive film 1 for metal terminal according to the present disclosure includes a laminate including at least the first resin layer 12a, the intermediate layer 11 and the second resin layer 12b in the stated order, and the first resin layer 12a is the resin layer A.

When the adhesive film 1 for metal terminal according to the present disclosure is disposed between the metal terminal 2 of the electrical storage device 10 and the exterior material 3 for electrical storage devices, the surface of the metal terminal 2 composed of metal and the heat-sealable resin layer 35 (a layer formed of a heat-sealable resin such as a polyolefin) of the exterior material 3 for electrical storage devices are bonded to each other with the adhesive film 1 for metal terminal interposed therebetween. The first resin layer 12a of the adhesive film 1 for metal terminal is disposed on the metal terminal 2 side, the second resin layer 12b is disposed on the side of the exterior material 3 for electrical storage devices, the first resin layer 12a adheres to the metal terminal 2, and the second resin layer 12b adheres to the heat-sealable resin layer 35 of the exterior material 3 for electrical storage devices. The first resin layer 12a may be a single layer, or may have multiple layers. The second resin layer 12b may be a single layer, or may have multiple layers.

[First resin layer 12a and second resin layer 12b]

As shown in Fig. 6, the adhesive film 1 for metal terminal according to the present disclosure includes the first resin layer 12a on one side of the intermediate layer 11 and the second resin layer 12b on the other side of the intermediate layer 11. The first resin layer 12a is disposed on the metal terminal 2 side. The second resin layer 12b is disposed on the side of the exterior material 3 for electrical storage devices. The first resin layer 12a and the second resin layer 12b are located, respectively, on surfaces on both sides in the adhesive film 1 for metal terminal according to the present disclosure.

In the present disclosure, the first resin layer 12a is formed of the resin layer A. The second resin layer 12b may be formed of the resin layer A, or may be formed of the resin layer B.

When the first resin layer 12a and the second resin layer 12b can be formed from resin films, respectively. When the first resin layer 12a and the second resin layer 12b are formed from resin films, respectively, resin films formed in advance may be used as the first resin layer 12a and the second resin layer 12b, respectively, in manufacturing of the adhesive film 1 for metal terminal according to the present disclosure by laminating the first resin layer 12a and the second resin layer 12b to the intermediate layer 11 and the like. The resins for forming the first resin layer 12a and the second resin

layer 12b may be each formed into a film on the surface of the intermediate layer 11 or the like by extrusion molding, coating or the like to obtain the first resin layer 12a and the second resin layer 12b formed of resin films.

The first resin layer 12a (resin layer A) disposed on the metal terminal 2 side more preferably contains an acid-modified polyolefin as a main component, still more preferably contains acid-modified polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the first resin layer 12a. For example, the phrase "the first resin layer 12a contains acid-modified polypropylene as a main component" means that the content ratio of acid-modified polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the first resin layer 12a.

As described above, it is preferable that the second resin layer 12b contains a polyolefin-based resin (the intermediate layer 11 has a polyolefin backbone), more preferably a polyolefin, and it is still more preferable that the second resin layer 12b is formed of a polyolefin. It is preferable that the second resin layer 12b contains a polyolefin or an acid-modified polyolefin, more preferably a polyolefin, among polyolefin-based resins, and it is still more preferable that the second resin layer 12b is a layer formed of a polyolefin. The polyolefin-based resin is preferably a polypropylene-based resin. The polyolefin is preferably polypropylene, and the acid-modified polyolefin is preferably polypropylene.

The second resin layer 12b disposed on the side of the exterior material 3 for electrical storage devices more preferably contains polyolefin as a main component, still more preferably contains polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the second resin layer 12b. For example, the phrase "the second resin layer 12b contains acid-modified polypropylene as a main component" means that the content ratio of polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the second resin layer 12b.

The melting peak temperature of the second resin layer 12b is preferably 110°C or higher, more preferably about 120°C or higher, still more preferably about 130°C or higher. From the same viewpoint, the melting peak temperature is, for example, 200°C or lower, preferably 190°C or lower, more preferably 180°C or lower, still more preferably about 170°C or lower, still more preferably about 160°C or lower. The melting peak temperature is preferably in the range of about 110 to 200°C, about 110 to 190°C, about 110 to 180°C, about 110 to 170°C, about 110 to 160°C, about 120 to 200°C, about 120 to 190°C, about 120 to 180°C, about 120 to 170°C, about 120 to 160°C, about 130 to 200°C, about 130 to 190°C, about 130 to 180°C, about 130 to 170°C, or about 130 to 160°C.

From the viewpoint of more suitably exhibiting the effect of the present disclosure, the thickness of the first resin layer 12a is preferably about 10 μm or more, more preferably about 15 μm or more, still more preferably about 20 μm or more, and preferably about 120 μm or less, more preferably about 100 μm or less, still more preferably 80 μm or less. The thickness of the first resin layer 12a is preferably in the range of about 10 to 120 μm, about 10 to 100 μm, about 10 to 80 μm, about 15 to 120 μm, about 15 to 100 μm, about 15 to 80 μm, about 20 to 120 μm, about 20 to 100 μm, or about 20 to 80 μm.

From the viewpoint of more suitably exhibiting the effect of the present disclosure, the thickness of the second resin layer 12b is preferably about 10 μm or more, more preferably about 15 μm or more, still more preferably about 20 μm or more, and preferably about 120 μm or less, more preferably about 100 μm or less, still more preferably 80 μm or less. The thickness of the second resin layer 12b is preferably in the range of about 10 to 120 μm, about 10 to 100 μm, about 10 to 80 μm, about 15 to 120 μm, about 15 to 100 μm, about 15 to 80 μm, about 20 to 120 μm, about 20 to 100 μm, or about 20 to 80 μm.

[Intermediate layer 11]

In the adhesive film 1 for metal terminal, the intermediate layer 11 is a layer that functions as a support for the adhesive film 1 for metal terminal.

The intermediate layer 11 may be formed of the resin layer A, or may be formed of the resin layer B.

The intermediate layer 11 can be formed from, for example, a resin film. When the intermediate layer 11 is formed from a resin film, a resin film formed in advance may be used as the intermediate layer 11 in manufacturing of the adhesive film 1 for metal terminal according to the present disclosure by laminating the intermediate layer 11 to the first resin layer 12a and the like. A resin for forming the intermediate layer 11 may be formed into a film on the surface of the first resin layer

12a or the like by extrusion molding, coating or the like to obtain the intermediate layer 11 formed of a resin film.

The material for forming the intermediate layer 11 is not particularly limited. Examples of the material for forming the intermediate layer 11 include polyolefin-based resins, polyamide-based resins, polyester-based resins, epoxy resins, acrylic resins, fluororesins, silicone resins, phenol resins, silicon resins, polyurethane resins, polyether imide, polycarbonate, and mixtures and copolymers thereof. Among them, polyolefin-based resins are particularly preferable. That is, the material for forming the intermediate layer 11 is preferably a resin containing a polyolefin backbone such as a polyolefin or an acid-modified polyolefin. The resin forming the intermediate layer 11 can be confirmed to contain a polyolefin backbone by an analysis method such as infrared spectroscopy or gas chromatography mass spectrometry.

As described above, it is preferable that the intermediate layer 11 contains a polyolefin-based resin, more preferably a polyolefin, and it is still more preferable that the intermediate layer 11 is a layer formed of a polyolefin. The layer formed of polyolefin may be a stretched polyolefin film or an unstretched polyolefin film, and is preferably an unstretched polyolefin film. Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylenes and polypropylene are preferred, with polypropylene being more preferred. In addition, it is preferable that the intermediate layer 11 contains homopolypropylene, it is more preferable that the intermediate layer 11 is formed of homopolypropylene and it is still more preferable that the base material is an unstretched homopolypropylene film because excellent electrolytic solution resistance is obtained.

Specific examples of the polyamide include aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 61, nylon 6T, nylon 6IT and nylon 6I6T (I denotes isophthalic acid and T denotes terephthalic acid), and polyamides containing aromatics, such as polymethaxylylene adipamide (MXD6); cycloaliphatic polyamides such as polyaminomethyl cyclohexyl adipamide (PACM 6); polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

Specific examples of the polyester include polyethylene terephthalate, polybutylene terephthalate, polyethylene naphthalate, polybutylene naphthalate, polyethylene isophthalate, copolymerization polyesters with ethylene terephthalate as a main repeating unit, and copolymerization polyesters with a butylene terephthalate as a main repeating unit. Specific examples of the copolymerization polyester including ethylene terephthalate as a main repeating unit include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/isophthalate), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). Specific examples of the copolymerization polyester with butylene terephthalate as a main repeating unit include copolymer polyesters that are polymerized with butylene isophthalate and include butylene terephthalate as a main repeating unit (hereinafter, abbreviated as follows after polybutylene(terephthalate/isophthalate)), polybutylene(terephthalate/adipate), polybutylene(terephthalate/sebacate), polybutylene(terephthalate/decane dicarboxylate) and polybutylene naphthalate. These polyesters may be used alone, or may be used in combination of two or more thereof.

In addition, the intermediate layer 11 may be formed of a nonwoven fabric formed of any of the resins described above. When the intermediate layer 11 is a nonwoven fabric, it is preferable that the intermediate layer 11 is formed of the above-described polyolefin-based resin, polyamide resin or the like.

The melting peak temperature of the intermediate layer 11 is preferably 120°C or higher, more preferably about 130°C or higher, still more preferably about 140°C or higher. From the same viewpoint, the melting peak temperature is, for example, 210°C or lower, preferably 200°C or lower, more preferably 190°C or lower, still more preferably about 180°C or lower, still more preferably about 170°C or lower. The melting peak temperature is preferably in the range of about 120 to 210°C, about 120 to 200°C, about 120 to 190°C, about 120 to 180°C, about 120 to 170°C, about 130 to 210°C, about 130 to 200°C, about 130 to 190°C, about 130 to 180°C, about 130 to 170°C, about 140 to 210°C, about 140 to 200°C, about 140 to 190°C, about 140 to 180°C, or about 140 to 170°C.

The crystallinity degree of the intermediate layer 11 which is measured under the following conditions using an X-ray diffractometer is preferably about 7.0 or more, more preferably about 8.0 or more, still more preferably about 9.0 or more, and preferably about 25.0 or less, more preferably about 22.0 or less, still more preferably about 19.0 or less, and is preferably in the range of about 8.0 to 25.0, about 8.0 to 22.0, about 8.0 to 19.0, about 9.0 to 25.0, about 9.0 to 22.0, or about 9.0 to 19.0. Conditions other than the following measurement conditions (apparatus, analysis and the like) are the same as

in the measurement of the crystallinity degree of the resin layer A.

(Measurement conditions)

· The angle of X-ray irradiation is set to 0.19 ° and 0.22 ° with respect to the surface (0°) of the intermediate layer.
· As an X-ray detector, R-AXIS is used. The camera length is 500 mm; the X-ray wavelength is 0.92 Å; and the exposure time is 30 seconds.

The intermediate layer 11 may be a single layer, or may have multiple layers.
In addition, a colorant can be blended into the intermediate layer 11 so that the intermediate layer 11 is a layer containing a colorant. In addition, the light transmittance can be adjusted by selecting a resin having low transparency. When the intermediate layer 11 is a film, it is also possible to use a colored film or a film having low transparency. In addition, when the intermediate layer 11 is a nonwoven fabric, it is possible to use a nonwoven fabric using fibers or a binder containing a colorant, or a nonwoven fabric having low transparency.
When the intermediate layer 11 is composed of a resin film, a surface of the intermediate layer 11 may be subjected to known easy-adhesive means such as corona discharge treatment, ozone treatment or plasma treatment if necessary.
From the viewpoint of more suitably exhibiting the effect of the present disclosure, the thickness of the intermediate layer 11 is preferably about 20 μm or more, more preferably about 30 μm or more, still more preferably about 40 μm or more, and preferably about 120 μm or less, more preferably about 110 or less, still more preferably 100 μm or less, still more preferably 80 μm or less. The thickness of the intermediate layer 11 is preferably in the range of about 20 to 120 μm, about 20 to 110 μm, about 20 to 100 μm, about 20 to 80 μm, about 30 to 120 μm, about 30 to 110 μm, about 30 to 100 μm, about 30 to 80 μm, about 40 to 120 μm, about 40 to 110 μm, about 40 to 100 μm, or about 40 to 80 μm.
From the same viewpoint, the ratio of the thickness of the intermediate layer 11 to the total thickness of the first resin layer 12a and the second resin layer 12b is preferably about 0.3 or more, more preferably about 0.4 or more, and preferably about 1.0 or less, more preferably about 0.8 or less, and is preferably in the range of about 0.3 to 1.0, about 0.3 to 0.8, about 0.4 to 1.0, or about 0.4 to 0.8. From the viewpoint of enhancing the insulation quality of the adhesive film 1 for metal terminal, the ratio is preferably about 0.55 or more, more preferably about 0.60 or more, and preferably about 1.0 or less, more preferably about 0.9 or less, and is preferably in the range of about 0.55 to 1.0, about 0.55 to 0.9, about 0.60 to 1.0, or about 0.60 to 0.9.
When the total thickness of the adhesive film 1 for metal terminal is 100%, the ratio of the total thickness of the first resin layer 12a and the second resin layer 12b is preferably about 30 to 80%, more preferably about 50 to 70%.
The adhesive film 1 for metal terminal according to the present disclosure can be manufactured by, for example, laminating the first resin layer 12a and the second resin layer 12b on both surfaces, respectively, of the intermediate layer 11. The intermediate layer 11 can be laminated to the first resin layer 12a and the second resin layer 12b by a known method such as an extrusion lamination method, a T-die method, an inflation method or a thermal lamination method.
The method for interposing the adhesive film 1 for metal terminal between the metal terminal 2 and the exterior material 3 for electrical storage devices is not particularly limited, and for example, as shown in Figs. 1 to 3, the adhesive film 1 for metal terminal may be wound around the metal terminal 2 at a portion where the metal terminal 2 is sandwiched between the exterior materials 3 for electrical storage devices. In addition, the adhesive film 1 for metal terminal may be disposed on both sides of the metal terminal 2 so as to cross the two metal terminals 2 in a portion where the metal terminal 2 is sandwiched between the exterior materials 3 for electrical storage devices.
The adhesion promoter layer 13 is a layer provided if necessary for the purpose of firmly bonding the intermediate layer 11 to the first resin layer 12a, and the intermediate layer 11 to the second resin layer 12b (see Fig. 7). The adhesion promoter layer 13 may be provided between the intermediate layer 11 and the first resin layer 12a and/or between the intermediate layer 11 and the second resin layer 12b.
The adhesion promoter layer 13 can be formed using a known adhesion promoter such as an isocyanate-based adhesion promoter, a polyethyleneimine-based adhesion promoter, a polyester-based adhesion promoter, a polyurethane-based adhesion promoter or a polybutadiene-based adhesion promoter. From the viewpoint of obtaining high adhesion strength, it is preferable that the adhesion promoter layer is formed of an isocyanate-based adhesion promoter, among the above-mentioned adhesion promoters. As the isocyanate-based adhesion promoter, one composed of an isocyanate component selected from a triisocyanate monomer and polymeric MDI is excellent in lamination strength and undergoes little decrease in lamination strength at a high temperature. In particular, it is particularly preferable to form the adhesion promoter layer from an adhesion promoter composed of triphenylmethane-4,4',4"-triisocyanate which is a triisocyanate monomer or polymethylene polyphenyl polyisocyanate which is polymeric MDI (NCO content: about 30% and viscosity: 200 to 700 mPa•s). In addition, it is also preferable to form the adhesion promoter layer from tris(p-isocyanatephenyl)thiophosphate which is a triisocyanate monomer, or a two-liquid curable adhesion promoter contain a polyethyleneimine-based resin as a main component and polycarbodiimide as a crosslinking agent.

The adhesion promoter layer 13 can be formed by performing coating by a known coating method such as a bar coating method, a roll coating method or a gravure coating method, and drying. The coating amount of the adhesion promoter is about 20 to 100 mg/m$^2$, preferably about 40 to 60 mg/m$^2$ in the case of an adhesion promoter composed of triisocyanate, about 40 to 150 mg/m$^2$, preferably about 60 to 100 mg/m$^2$ in the case of an adhesion promoter composed of polymeric MDI, and about 5 to 50 mg/m$^2$, preferably about 10 to 30 mg/m$^2$ in the case of a two-liquid curable adhesion promoter containing polyethyleneimine as a main component and polycarbodiimide as a crosslinking agent. The triisocyanate monomer is a monomer having three isocyanate groups per molecule, and the polymeric MDI is a mixture of MDI and a MDI oligomer obtained by polymerizing MDI, and is represented by the following formula.

[Chemical Formula 1]

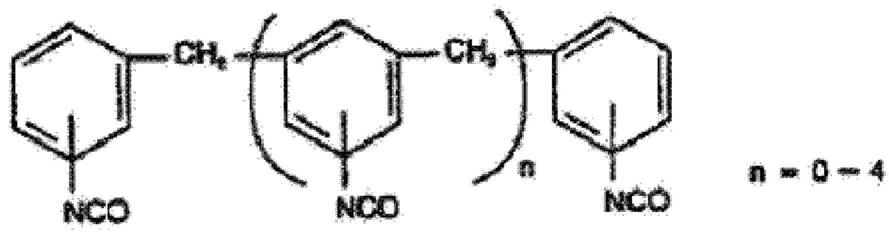

From the viewpoint of more suitably exhibiting the effect of the present invention, it is preferable that surfaces of the first resin layer 12a and the intermediate layer 11 are in contact with each other, and surfaces of the second resin layer 12b and the intermediate layer 11 are in contact with each other.

Specific examples of the preferred laminated configuration of the adhesive film 1 for metal terminal according to the present disclosure include a three-layer configuration in which a first resin layer formed of acid-modified polypropylene, a base material formed of polypropylene and a second resin layer formed of acid-modified polypropylene are laminated in the stated order; and a three-layer configuration in which a first resin layer formed of acid-modified polypropylene, a base material formed of polypropylene and a second resin layer formed of polypropylene are laminated in the stated order. Among them, the latter, i.e., a three-layered configuration is preferable from the viewpoint of bondability between the heat-sealable resin layer 35 of the exterior material 3 for electrical storage devices and the second resin layer 12b.

The heat shrinkage ratio of the adhesive film 1 for metal terminal according to the present disclosure, which is measured under the following conditions, is preferably 60% or less, more preferably 38% or less, still more preferably 30% or less, still more preferably 20% or less, and preferably in the range of about 0 to 60%, about 0 to 38%, about 0 to 30%, or about 0 to 20%.

(Method for measuring heat shrinkage ratio (%))

The adhesive film for metal terminal is cut to 110 mm in length (MD) × 10 mm in width (TD) to obtain a test piece. Next, the length M (mm) of the test piece is measured with a metal scale. Next, an end part (about 10 mm) of the test piece in the length direction is fixed to a wire mesh with a tape, so that the test piece is suspended from the wire mesh. In this state, the test piece is placed for 120 seconds in an oven heated to 190°C, and is then taken out together with the wire mesh, and naturally cooled in an environment at room temperature (25°C). Next, the length N (mm) of the test piece naturally cooled to room temperature is measured with a metal scale. The heat shrinkage ratio of the adhesive film for metal terminal is calculated from the following equation.

$$\text{Heat shrinkage ratio (\%)} = (1 - (\text{length N}/\text{length M})) \times 100$$

[Metal terminal 2]

The adhesive film 1 for metal terminal according to the present disclosure is interposed between the metal terminal 2 and the exterior material 3 for electrical storage devices. The metal terminal 2 (tab) is a conductive member electrically connected to an electrode (positive electrode or negative electrode) of the electrical storage device element 4, and is composed of a metal material. The metal material that forms the metal terminal 2 is not particularly limited, and examples thereof include aluminum, nickel, and copper. For example, the metal terminal 2 connected to a positive electrode of a lithium ion electrical storage device is typically composed of aluminum or the like. In addition, the metal

terminal 2 connected to a negative electrode of a lithium ion electrical storage device is typically composed of copper, nickel or the like.

From the viewpoint of enhancing electrolytic solution resistance, it is preferable that the surface of the metal terminal 2 is subjected to chemical conversion treatment. For example, when the metal terminal 2 is formed of aluminum, specific examples of the chemical conversion treatment include a known method in which a corrosion-resistant film of a phosphate, a chromate, a fluoride, a triazinethiol compound or the like. Among the methods for forming a corrosion-resistant film, phosphoric acid chromate treatment using a material including three components: a phenol resin, a chromium (III) fluoride compound and phosphoric acid is preferred.

The size of the metal terminal 2 may be appropriately set according to the size of an electrical storage device used. The thickness of the metal terminal 2 is preferably about 50 to 1000 μm, more preferably about 70 to 800 μm. In addition, the length of the metal terminal 2 is preferably about 1 to 200 mm, more preferably about 3 to 150 mm. In addition, the width of the metal terminal 2 is preferably about 1 to 200 mm, more preferably about 3 to 150 mm.

[Exterior material 3 for electrical storage devices]

Examples of the exterior material 3 for electrical storage devices include materials having a laminated structure including a laminate having at least a base material layer 31, a barrier layer 33, and a heat-sealable resin layer 35 in the stated order. Fig. 8 shows an aspect in which the base material layer 31, an adhesive agent layer 32 provided if necessary, the barrier layer 33, an adhesive layer 34 provided if necessary, and the heat-sealable resin layer 35 are laminated in the stated order as an example of a cross-sectional structure of the exterior material 3 for electrical storage devices. In the exterior material 3 for electrical storage devices, the base material layer 31 is on the outer layer side, and the heat-sealable resin layer 35 is an innermost layer. During construction of an electrical storage device, the heat-sealable resin layers 35 located on the peripheral edge of the electrical storage device element 4 is brought into contact with each other, and heat-welded to seal the electrical storage device element 4, so that the electrical storage device element 4 is sealed. Figs. 1 to 3 show the electrical storage device 10 where the embossed-type exterior material 3 for electrical storage devices, which is molded by embossing molding, is used, but the exterior material 3 for electrical storage devices may be of non-molded pouch type. Examples of the pouch type include three-way seal, four-way seal and pillow type, and any of the types may be used.

The thickness of the laminate forming the exterior material 3 for electrical storage devices is not particularly limited, and is preferably about 190 μm or less, about 180 μm or less, about 160 μm or less, about 155 μm or less, about 140 μm or less, about 130 μm or less, or about 120 μm or less from the viewpoint of cost reduction, improvement of the energy density and the like, and preferably about 35 μm or more, about 45 μm or more, about 60 μm or more, or about 80 μm or more from the viewpoint of maintaining the function of the exterior material 3 for electrical storage devices, which is protection of the electrical storage device element 4. For example, the thickness is preferably in the range of about 35 to 190 μm, about 35 to 180 μm, about 35 to 160 μm, about 35 to 155 μm, about 35 to 140 μm, about 35 to 130 μm, about 35 to 120 μm, about 45 to 190 μm, about 45 to 180 μm, about 45 to 160 μm, about 45 to 155 μm, about 45 to 140 μm, about 45 to 130 μm, about 45 to 120 μm, about 60 to 190 μm, about 60 to 180 μm, about 60 to 160 μm, about 60 to 155 μm, about 60 to 140 μm, about 60 to 130 μm, about 60 to 120 μm, about 80 to 190 μm, about 80 to 180 μm, about 80 to 160 μm, about 80 to 155 μm, about 80 to 140 μm, about 80 to 130 μm or about 80 to 120 μm.

(Base material layer 31)

In the exterior material 3 for electrical storage devices, the base material layer 31 is a layer that functions as a base material of the exterior material for electrical storage devices, and forms the outermost layer side of the exterior material for electrical storage devices.

The material that forms the base material layer 31 is not particularly limited as long as it has an insulation quality. Examples of the material that forms the base material layer 31 include polyester, polyamide, epoxy, acrylic resins, fluororesins, polyurethane, silicone resins, phenol, polyetherimide, polyimide and mixtures and copolymers thereof. Polyester such as polyethylene terephthalate or polybutylene terephthalate has the advantage that it is excellent in electrolytic solution resistance, so that whitening etc. due to deposition of an electrolytic solution is hardly occurs, and thus the polyester is suitably used as a material for formation of the base material layer 31. In addition, a polyamide film is excellent in stretchability, can prevent occurrence of whitening due to resin breakage in the base material layer 31 during molding, and is thus suitably used as a material for formation of the base material layer 31.

The base material layer 31 may be formed of a uniaxially or biaxially stretched resin film, or may be formed of an unstretched resin film. Among them, a uniaxially or biaxially stretched resin film, particularly a biaxially stretched resin film has improved heat resistance through orientation and crystallization, and is therefore suitably used as the base material layer 31.

Among them, nylons and polyesters are preferable and biaxially stretched nylons and biaxially stretched

polyesters are more preferable as resin films for formation of the base material layer 31.

The base material layer 31 can also be laminated with a resin film which is made of a different material for improving pinhole resistance, and insulation quality as a packaging of an electrical storage device. Specific examples include a multi-layered structure in which a polyester film and a nylon film are laminated, and a multi-layered structure in which a biaxially stretched polyester and a biaxially stretched nylon are laminated. When the base material layer 31 is made to have a multi-layered structure, the resin films may be bonded with the use of an adhesive, or may be directly laminated without the use of an adhesive. Examples of the method for bonding the resin films without the use of an adhesive include methods in which the resin films are bonded in a heat-melted state, such as a co-extrusion method, a sand lamination method and a thermal lamination method.

In addition, the friction of the base material layer 31 may be reduced for improving moldability. When the friction of the base material layer 31 is reduced, the friction coefficient of the surface thereof is not particularly limited, and it is, for example, 1.0 or less. Examples of the method for reducing the friction of the base material layer 31 include matting treatment, formation of a thin film layer of a slipping agent, and a combination thereof.

The thickness of the base material layer 31 is, for example, about 10 to 50 μm, preferably about 15 to 30 μm.

(Adhesive agent layer 32)

In the exterior material 3 for electrical storage devices, the adhesive agent layer 32 is a layer disposed on the base material layer 31 if necessary for imparting adhesion to the base material layer 31. That is, the adhesive agent layer 32 is provided between the base material layer 31 and the barrier layer 33.

The adhesive agent layer 32 is formed from an adhesive capable of bonding the base material layer 31 and the barrier layer 33. The adhesive used for forming the adhesive agent layer 32 may be a two-liquid curable adhesive, or may be a one-liquid curable adhesive. In addition, the adhesion mechanism of the adhesive used for forming the adhesive agent layer 32 is not particularly limited, and may be any one of a chemical reaction type, a solvent volatilization type, a heat melting type, a heat pressing type and so on.

As resin components of adhesives that can be used for formation of the adhesive agent layer 32, polyurethane-based two-liquid curable adhesive agents; and polyamides, polyesters or blend resins of these resins and modified polyolefins are preferable because they are excellent in spreadability, durability and a yellowing inhibition action under high-humidity conditions, a thermal degradation inhibition action during heat-sealing, and so on, and effectively suppress occurrence of delamination by inhibiting a reduction in lamination strength between the base material layer 31 and the barrier layer 33.

The adhesive agent layer 32 may be made multilayered with different adhesive components. When the adhesive agent layer 32 is made multilayered with different components, it is preferable that a resin excellent in bondability to the base material layer 31 is selected as an adhesive component to be disposed on the base material layer 31 side, and an adhesive component excellent in bondability to the barrier layer 33 is selected as an adhesive component to be disposed on the barrier layer 33 side, from the viewpoint of improving lamination strength between the base material layer 31 and the barrier layer 33. When the adhesive agent layer 32 is made multilayered with different adhesive components, specific examples of the preferred adhesive component to be disposed on the barrier layer 33 side include acid-modified polyolefins, metal-modified polyolefins, mixed resins of polyesters and acid-modified polyolefins, and resins containing a copolymerization polyester.

The thickness of the adhesive agent layer 32 is, for example, about 2 to 50 μm, preferably about 3 to 25 μm.

(Barrier layer 33)

In the exterior material 3 for electrical storage devices, the barrier layer 33 is a layer which is intended to improve the strength of the exterior material for electrical storage devices and which has a function of preventing ingress of water vapor, oxygen, light and the like into the electrical storage device. The barrier layer 33 is preferably a metal layer, i.e., a layer formed of a metal. Specific examples of the metal forming the barrier layer 33 include aluminum, stainless and titanium, with aluminum being preferred. The barrier layer 33 can be formed from, for example, a metal foil, a metal vapor-deposited film, an inorganic oxide vapor-deposited film, a carbon-containing inorganic oxide vapor-deposited film, a film provided with any of these vapor-deposited films, or the like, and is formed preferably from a metal foil, more preferably from an aluminum foil. From the viewpoint of preventing generation of wrinkles and pinholes in the barrier layer 33 during manufacturing of the exterior material for electrical storage devices, it is more preferable to form the barrier layer from a soft aluminum foil such as annealed aluminum (JIS H4160: 1994 A8021H-O, JIS H4160: 1994 A8079H-O, JIS H4000:2014 A8021P-O, JIS H4000:2014 A8079P-O).

The thickness of the barrier layer 33 is preferably about 10 to 200 μm, more preferably about 20 to 100 μm, about 20 to 45 μm, about 45 to 65 μm or about 65 to 85 μm, from the viewpoint of making pinholes less likely to be generated by molding while thinning the exterior material for electrical storage devices.

In addition, at least one surface, preferably both surfaces, of the barrier layer 33 are subjected to a chemical conversion treatment for stabilization of bonding, prevention of dissolution and corrosion, and so on. Here, the chemical conversion treatment is a treatment for forming a corrosion-resistant film on the surface of the barrier layer.

(Adhesive layer 34)

In the exterior material 3 for electrical storage devices, the adhesive layer 34 is a layer provided between the barrier layer 33 and the heat-sealable resin layer 35 if necessary for firmly bonding the heat-sealable resin layer 35.
The adhesive layer 34 is formed from an adhesive capable of bonding the barrier layer 33 and the heat-sealable resin layer 35 to each other. The composition of the adhesive used for forming the adhesive layer is not particularly limited, and examples thereof include resin compositions containing an acid-modified polyolefin. Examples of the acid-modified polyolefin include those identical to the acid-modified polyolefins exemplified for the first resin layer 12a and the second resin layer 12b.
The thickness of the adhesive layer 34 is, for example, about 1 to 40 μm, preferably about 2 to 30 μm.

(Heat-sealable resin layer 35)

In the exterior material 3 for electrical storage devices, the heat-sealable resin layer 35 is a layer which corresponds to an innermost layer and performs a function of hermetically sealing the electrical storage device element by heat-sealing the heat-sealable resin layers to each other during construction of the electrical storage device.
The resin component to be used in the heat-sealable resin layer 35 is not particularly limited as long as it can be heat-welded, and examples thereof include polyolefins and cyclic polyolefins.
Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylene and polypropylene are preferred.
The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbomene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.
Among these resin components, crystalline or noncrystalline polyolefins, cyclic polyolefins and blend polymers thereof are preferable, and polyethylene, polypropylene, copolymers of ethylene and norbornene, and blend polymers of two or more thereof are more preferable.
The heat-sealable resin layer 35 may be formed from one resin component alone, or may be formed from a blend polymer obtained by combining two or more resin components. Further, the heat-sealable resin layer 35 may have only one layer, but may have two or more layers formed of the same resin component or different resin components. It is particularly preferable that the second resin layer 12b and the heat-sealable resin layer 35 have the same resin because adhesion between these layers is improved.
The thickness of the heat-sealable resin layer 35 is not particularly limited, and is, for example, about 2 to 2000 μm, preferably about 5 to 1000 μm, still more preferably about 10 to 500 μm. The thickness of the heat-sealable resin layer 35 is, for example, about 100 μm or less, preferably about 85 μm or less, more preferably about 15 to 85 μm. For example, when the thickness of the adhesive layer 5 described later is 10 μm or more, the thickness of the heat-sealable resin layer 35 is preferably about 85 μm or less, more preferably about 15 to 45 μm. For example, when the thickness of the adhesive layer 5 described later is less than 10 μm or the adhesive layer 5 is not provided, the thickness of the heat-sealable resin layer 35 is preferably about 20 μm or more, more preferably about 35 to 85 μm.
The exterior material for electrical storage devices according to the present disclosure can be in the form of a kit including an exterior material for electrical storage devices which is used for electrical storage devices, and the adhesive film for metal terminal according to the present disclosure. Even in this case, an electrical storage device to which the present disclosure is applied includes an electrical storage device element including at least a positive electrode, a negative electrode, and an electrolyte; an exterior material for electrical storage devices which seals the electrical storage device element; and a metal terminal electrically connected to each of the positive electrode and the negative electrode and protruding to the outside of the exterior material for electrical storage devices. The kit of the present disclosure is used such that the adhesive film for metal terminal according to the present disclosure is interposed between a metal terminal and an exterior material for electrical storage devices.

2. Electrical storage device

The electrical storage device 10 of the present disclosure includes the electrical storage device element 4 including at least a positive electrode, a negative electrode, and an electrolyte; the exterior material 3 for electrical storage devices which seals the electrical storage device element 4; and the metal terminal 2 electrically connected to each of the positive electrode and the negative electrode and protruding to the outside of the exterior material 3 for electrical storage devices. In the electrical storage device 10 of the present disclosure, an adhesive film for metal terminal is interposed between the metal terminal 2 and the exterior material 3 for electrical storage devices, and the resin layer A of the adhesive film for metal terminal has a crystallinity degree of 11 or more as measured under the above-described conditions using an X-ray diffractometer. The electrical storage device 10 of the present disclosure can be manufactured by a method including the step of interposing the adhesive film 1 for metal terminal according to the present disclosure between the metal terminal 2 and the exterior material 3 for electrical storage devices.

In the electrical storage device 10 of the present disclosure, the adhesive film for metal terminal is heat-sealed to the metal terminal and the exterior material for electrical storage devices in a state of being interposed between the metal terminal 2 and the exterior material 3 for electrical storage devices. The heating temperature, pressure and time in the heat-sealing may be identical or different from the heating conditions under which the crystallinity degree of the resin layer A of the adhesive film 1 for metal terminal according to the present disclosure is measured (200°C, 0.25 MPa and 16 seconds). Even if the heating conditions are different, it can be said that the amounts of heat applied to the resin layer A in heat-sealing of the resin layer A to the metal terminal are substantially the same. The amount of heat applied to the adhesive film for metal terminal in heat-sealing of the heat-sealable resin layers of the exterior material for electrical storage devices is much smaller than the amount of heat applied in heat-sealing of the resin layer A to the metal terminal. When the resin layer A of the adhesive film for metal terminal in the electrical storage device 10 has a crystallinity degree of 11 or more as measured under the above-described conditions using an X-ray diffractometer, the adhesive film 1 for metal terminal according to the present disclosure has excellent adhesion to the metal terminal.

Specifically, the electrical storage device element 4 including at least a positive electrode, a negative electrode, and an electrolyte is covered with the exterior material 3 for electrical storage devices such that a flange portion (a region where the heat-sealable resin layers 35 contact each other, the region being a peripheral edge portion 3a of the exterior material 3 for electrical storage devices) of the exterior material 3 for electrical storage devices can be formed on the peripheral edge of the electrical storage device element 4, where the adhesive film 1 for metal terminal according to the present disclosure is interposed between the metal terminal 2 and the heat-sealable resin layer 35 while the metal terminal 2 connected to each of the positive electrode and the negative electrode protrudes to the outside, and the heat-sealable resin layers 35 at the flange portion are heat-sealed to each other, thereby providing the electrical storage device 10 using the exterior material 3 for electrical storage devices. When the electrical storage device element 4 is stored using the exterior material 3 for electrical storage devices, the heat-sealable resin layer 35 of the exterior material 3 for electrical storage devices is on the inner side (a surface contacting the electrical storage device element 4).

The exterior material for electrical storage devices according to the present disclosure can be suitably used for electrical storage devices such as batteries (including condensers, capacitors and the like). The exterior material for electrical storage devices according to the present disclosure may be used for either primary batteries or secondary batteries, and is preferably used for secondary batteries. The type of secondary battery to which the exterior material for electrical storage devices according to the present disclosure is applied is not particularly limited, and examples thereof include lithium ion batteries, lithium ion polymer batteries, all-solid-state batteries, semi-solid-state batteries, pseudo-solid-state batteries, polymer batteries, all-polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Of these secondary batteries, preferred subjects to which the exterior material for electrical storage devices according to the present disclosure is applied include lithium ion batteries and lithium ion polymer batteries.

Examples

Hereinafter, the present disclosure will be described in detail by way of examples and comparative examples. However, the present disclosure is not limited to the examples.

<Manufacturing of adhesive film for metal terminal>

Example 1

Using an extruder and a T-die casting apparatus, polypropylene as a second resin layer on the exterior material side (a PP layer having a melting peak temperature of 140°C) and carbon black-containing maleic anhydride-modified

polypropylene as a first resin layer (resin layer A) on the metal terminal side (a PPa layer having a melting peak temperature of 140°C) were extruded in a thickness of 50 μm to one surface and the other surface, respectively, of polypropylene as an intermediate layer (a PP layer of homopolypropylene having a melting peak temperature of 163°C and a thickness of 50 μm) to obtain an adhesive film (total thickness: 150 μm) in which a first resin layer (a resin layer A which is a PPa layer having a melting peak temperature of 140°C and a thickness of 50 μm), a base material (a PP layer having a melting peak temperature of 163°C and a thickness of 50 μm) and a second resin layer (a PP layer having a melting peak temperature of 140°C and a thickness of 50 μm) were laminated in the stated order. The first resin layer as the resin layer A was manufactured under a film formation temperature reference condition, a film formation rate reference condition and a cooling reference condition to adjust a later-described crystallinity degree after heating.

Example 2

Using an extruder and a T-die casting apparatus, maleic anhydride-modified polypropylene as a second resin layer on the exterior material side (a PPa layer having a melting peak temperature of 140°C) and maleic anhydride-modified polypropylene as a first resin layer (resin layer A) on the metal terminal side (a PPa layer having a melting peak temperature of 140°C) were extruded in a thickness of 25 μm to one surface and the other surface, respectively, of polypropylene as an intermediate layer (a PP layer of random polypropylene having a melting peak temperature of 143°C and a thickness of 100 μm) to obtain an adhesive film (total thickness: 150 μm) in which a first resin layer (a resin layer A which is a PPa layer having a melting peak temperature of 140°C and a thickness of 25 μm), a base material (a PP layer having a melting peak temperature of 143°C and a thickness of 100 μm) and a second resin layer (a PPa layer having a melting peak temperature of 140°C and a thickness of 25 μm) were laminated in the stated order. The first resin layer as the resin layer A was manufactured at a temperature much lower than the film formation temperature reference and a rate much lower than the film formation rate reference and under a condition of cooling more rapid than the cooling reference to adjust the later-described crystallinity degree after heating.

Example 3

Using an extruder and a T-die casting apparatus, polypropylene as a second resin layer on the exterior material side (a PP layer having a melting peak temperature of 140°C)
was extruded in a thickness of 40 μm to one surface of carbon black-containing polypropylene as an intermediate layer (a PP layer of homopolypropylene having a melting peak temperature of 160°C and a thickness of 60 μm), and maleic anhydride-modified polypropylene as a first resin layer (resin layer A) on the metal terminal side (a PPa layer having a melting peak temperature of 140°C) were extruded in a thickness of 50 μm to the other surface to obtain an adhesive film (total thickness: 150 μm) in which a first resin layer (a resin layer A which is a PPa layer having a melting peak temperature of 140°C and a thickness of 50 μm), a base material (a PP layer having a melting peak temperature of 160°C and a thickness of 60 μm) and a second resin layer (a PP layer having a melting peak temperature of 140°C and a thickness of 40 μm) were laminated in the stated order. The first resin layer as the resin layer A was manufactured at a temperature lower than the film formation temperature reference and a rate higher than the film formation rate reference and under a condition of cooling slower than the cooling reference to adjust the later-described crystallinity degree after heating.

Example 4

Using a blowing extruder, maleic anhydride-modified polypropylene as a second resin layer on the exterior material side (a PPa layer having a melting peak temperature of 140°C) and maleic anhydride-modified polypropylene as a first resin layer (resin layer A) on the metal terminal side (a PPa layer having a melting peak temperature of 140°C) were extruded in a thickness of 35 μm to one surface and the other surface, respectively, of polypropylene as an intermediate layer (a PP layer of homopolypropylene having a melting peak temperature of 160°C and a thickness of 80 μm) to obtain an adhesive film (total thickness: 150 μm) in which a first resin layer (a resin layer A which is a PPa layer having a melting peak temperature of 140°C and a thickness of 35 μm), a base material (a PP layer having a melting peak temperature of 160°C and a thickness of 80 μm) and a second resin layer (a PPa layer having a melting peak temperature of 140°C and a thickness of 35 μm) were laminated in the stated order. The first resin layer as the resin layer A was manufactured at a temperature lower than the film formation temperature reference and a rate much lower than the film formation rate reference and under a condition much slower than the cooling reference to adjust the later-described crystallinity degree after heating.

Example 5

Using an extruder and a T-die casting apparatus, polypropylene as a second resin layer on the exterior material

side (a PP layer having a melting peak temperature of 140°C) and carbon black-containing maleic anhydride-modified polypropylene as a first resin layer (resin layer A) on the metal terminal side (a PPa layer having a melting peak temperature of 140°C) were extruded in a thickness of 60 μm to one surface and the other surface, respectively, of polypropylene as an intermediate layer (a PP layer of homopolypropylene having a melting peak temperature of 163°C and a thickness of 80 μm) to obtain an adhesive film (total thickness: 200 μm) in which a first resin layer (a resin layer A which is a PPa layer having a melting peak temperature of 140°C and a thickness of 60 μm), a base material (a PP layer having a melting peak temperature of 163°C and a thickness of 80 μm) and a second resin layer (a PP layer having a melting peak temperature of 140°C and a thickness of 60 μm) were laminated in the stated order. The first resin layer as the resin layer A was manufactured under a film formation temperature reference condition, a film formation rate reference condition and a cooling reference condition to adjust the crystallinity degree.

Example 6

Using an extruder and a T-die casting apparatus, polypropylene as a second resin layer on the exterior material side (a PP layer having a melting peak temperature of 140°C) and carbon black-containing maleic anhydride-modified polypropylene as a first resin layer (resin layer A) on the metal terminal side (a PPa layer having a melting peak temperature of 140°C) were extruded in a thickness of 60 μm to one surface and the other surface, respectively, of polypropylene as an intermediate layer (a PP layer of homopolypropylene having a melting peak temperature of 163°C and a thickness of 80 μm) to obtain an adhesive film (total thickness: 200 μm) in which a first resin layer (a resin layer A which is a PPa layer having a melting peak temperature of 140°C and a thickness of 60 μm), a base material (a PP layer having a melting peak temperature of 163°C and a thickness of 80 μm) and a second resin layer (a PP layer having a melting peak temperature of 140°C and a thickness of 60 μm) were laminated in the stated order. The first resin layer as the resin layer A was manufactured under a film formation temperature reference condition, a film formation rate reference condition and a cooling reference condition to adjust the crystallinity degree.

Example 7

Using an extruder and a T-die casting apparatus, polypropylene as a second resin layer on the exterior material side (a PP layer having a melting peak temperature of 140°C) was extruded in a thickness of 60 μm to one surface of polypropylene as an intermediate layer (a PP layer of homopolypropylene having a melting peak temperature of 163°C and a thickness of 80 μm), and carbon black-containing maleic anhydride-modified polypropylene (a PPa layer having a melting peak temperature of 140°C) is extruded in a thickness of 20 μm to the other surface. Thereto, maleic anhydride polypropylene as a first resin layer (resin layer A) on the metal terminal side (a PPa layer having a melting peak temperature of 140°C) was further extruded in a thickness of 40 μm to obtain an adhesive film (total thickness: 200 μm) in which a first resin layer (a resin layer A which is a PPa layer having a melting peak temperature of 140°C and a thickness of 40 μm), a third resin layer (a PPa layer having a melting peak temperature of 140°C and a thickness of 20 μm), a base material (a PP layer having a melting peak temperature of 163°C and a thickness of 80 μm) and a second resin layer (a PP layer having a melting peak temperature of 140°C and a thickness of 60 μm) were laminated in the stated order. The first resin layer as the resin layer A was manufactured under a film formation temperature reference condition, a film formation rate reference condition and a cooling reference condition to adjust the crystallinity degree.

Comparative Example 1

Using an extruder and T-die casting, an acid-modified polypropylene film (having a melting peak temperature of 140°C and a thickness of 100 μm) alone was obtained as an adhesive film for metal terminal.
<Measurement of crystallinity degree of resin layer A and intermediate layer after heating>
The heating of the adhesive films of Examples 1 to 7 and Comparative Example 1 at 200°C and 0.25 MPa for 16 seconds are performed specifically as follows.
Each of the adhesive films for metal terminal, which had been obtained in examples and comparative examples, was cut to a length of 50 mm and a width of 20 mm. With a polytetrafluoroethylene (PTFE film, thickness 100 μm) placed on the laminate (with the PTFE film covering a surface of the adhesive film for metal terminal), the laminate was put on a pressing machine heated to 200°C (the resin layer A is on the hot plate side), a silicone sponge sheet was put thereon, and the laminate was left standing at a pressure of 0.25 MPa for 16 seconds to heat the adhesive film. The laminate after heating was naturally cooled to 25°C. Next, the crystallinity degrees of the first resin layer (resin layer A) and the intermediate layer after heating were each measured under the following conditions using an X-ray diffractometer (BL8S3 Beamline (trade name) from Aichi Synchrotron Radiation Center). For the adhesive film of Comparative Example 1, the crystallinity degree of the acid-modified polypropylene film after heating was measured in the same manner as in Examples 1 to 7. The results are shown in Table 1.

(Measurement conditions: resin layer A)

- The angle of X-ray irradiation is 0.09° with respect to the surface (0°) of the resin layer A.
- The measurement range is 5 μm in depth from the surface of the resin layer A.
- The camera length of an X-ray detector is 500 mm; the X-ray wavelength is 0.92 Å; and the exposure time is 30 seconds.

(Measurement conditions: intermediate layer)

- The angle of X-ray irradiation is 0.19 ° and 0.22 ° with respect to the surface (0°) of the resin layer A.
- As an X-ray detector, R-AXIS is used. The camera length is 500 mm; the X-ray wavelength is 0.92 Å; and the exposure time is 30 seconds.

(Analysis of intermediate layer)

Using software FI2D for X-ray scattering data analysis, data at azimuth angles of 80 deg to 100 deg is cut out from the spectrum data of a two-dimensional detector, and added up in an azimuth angle direction to obtain a one-dimensional spectrum indicating an intensity value with respect to a diffraction angle 2θ. Further, a straight line extending between two points of 2θ = 4.0 deg and 2θ = 16.0 deg on the one-dimensional spectrum is subtracted as a background. Thereafter, the spectral intensity value A of an amorphous component is defined as A: the smallest of the intensity values in the region of 2θ = 8.8 deg to 9.8 deg, and the crystal peak intensity values P1, P2, P3 and P4 of the four crystal planes are defined as follows.

P1: Intensity value of the peak top of a peak in the region of 2θ = 7.0 deg to 9.2 deg.

P2: Intensity value of the peak top of a peak at 2θ = 9.2 deg to 10.6 deg.

P3: Intensity value of the peak top of a peak at 2θ = 10.6 deg to 12.0 deg.

P4: Intensity value of the peak top of a peak at 2θ = 12.0 deg to 14.0 deg.

A value obtained by dividing a value obtained by subtracting the value of P1+P2+P3+P4 in measurement at an X-ray irradiation angle of 0.19 ° from the value of P1+P2+P3+P4 in measurement at an X-ray irradiation angle of 0.22 ° by a value obtained by subtracting the value of A in measurement at an X-ray irradiation angle of 0.19 ° from the value of A in measurement at an X-ray irradiation angle of 0.22 ° is defined as a crystallinity degree of the intermediate layer, Ci.

<Measurement of degree of uneven distribution of proportion of island portions in resin layer A after heating>

For the first resin layer (resin layer A) after the heating, the degree of uneven distribution of proportions of island portions was measured under the following conditions. For the adhesive film of Comparative Example 1, the degree of uneven distribution of proportions of island portions in the acid-modified polypropylene film after the heating was measured in the same manner as in Examples 1 to 7. The results are shown in Table 1.

[Pretreatment conditions]

- A sample is cut into a strip shape, and embedded in a thermosetting resin (50°C, 24 hr).
- Trimming is performed, followed by staining with Ru
- A cross-section is prepared using ultramicrotome (with a diamond knife; finished thickness: 80 nm)
- Os coating (1 to 3 nm)

[SEM observation conditions]

- Measuring apparatus: commercially available SEM (for example, S-4800 TYPE II manufactured by Hitachi High-Tech Corporation)
- Acceleration voltage: 5.0 kV

· Emission current: 20 μA
· W.D: 5 mm
· Detector: Upper + H.A
· Measuring magnification: 10k
· Resolution: 256 dpi

[Image processing conditions]

The following image processing is performed on an electron microscope image to obtain a binarized image.
OpenCV, which is an image processing library of Python, can be used in the image processing. The image processing conditions are described below.

1. Gaussian filter (kernel size 5px × 5px).
2. The measurement image is enlarged longitudinally and laterally by 8 times (complement method = CUBIC).
3. Noises are removed using a fastNlMeansDenoising function (Background color = black, parameters of the fastNlMeansDenoising function are as follows: h = 10, hForColorComponents = 10, templateWindowSize = 7 and searchWindowSize = 21).
4. The binarization is performed such that the light portion is white and the dark portion is black (threshold = threshold of Otsu).
5. Morphological transformation - Open processing (kernel size = 45px × 15px).
6. Noise removal (removal of black portions having an area of 625px^2 or less).
7. Noise removal (removal of white portions having an area of 75px^2 or less).
8. Noise removal (removal of black portions having an area of 10000px^2 or less).
9. Morphological transformation - Open processing (kernel size = 65px × 25px).
10. Morphological transformation - CLOSE processing (kernel size = 25px × 1px).

504px × 504px (corresponding to an angle of view of 1 μm × 1 μm) is cut out from the obtained binarized image, and the proportion of white portions in the relevant region is defined as W (%).
Arbitrary 40 portions are cut out, and used to calculate the proportion of white portions, and a value obtained by dividing the standard deviation of W in the 40 portions by the average value of W in the 40 portions is defined as a degree of uneven distribution L of the sea-island structure.

<Measurement of degree of orientation of resin layer A after heating>

For the first resin layer (resin layer A) of the adhesive film of each of Examples 1 to 7, the degree of orientation was measured under the following conditions. For the adhesive film of Comparative Example 1, the degree of orientation of the acid-modified polypropylene film was measured in the same manner as in Examples 1 to 7. The results are shown in Table 1.

(Measurement conditions)

Using an X-ray diffractometer (BL8S3 Beamline (trade name) from Aichi Synchrotron Radiation Center), the crystallinity degree is measured under the following conditions.

(Measurement conditions)

· The angle of X-ray irradiation is 0.09° with respect to the surface (0°) of the resin layer A.
· The measurement range is 5 μm in depth from the surface of the resin layer A.
· As an X-ray detector, for example, R-AXIS is used. The camera length is 500 mm; the X-ray wavelength is 0.92 Å; and the exposure time is 30 seconds.

(Analysis of intermediate layer)

Using software FI2D for X-ray scattering data analysis, data at azimuth angles of 80 deg to 100 deg is cut out from the spectrum data of a two-dimensional detector, and added up in an azimuth angle direction to obtain a one-dimensional spectrum indicating an intensity value with respect to a diffraction angle 2θ. Further, a straight line extending between two

points of 2θ = 4.0 deg and 2θ = 16.0 deg on the one-dimensional spectrum is subtracted as a background. Thereafter, the spectral intensity value A of an amorphous component is defined as A: the smallest of the intensity values in the region of 2θ = 8.8 deg to 9.8 deg, and the crystal peak intensity values P1, P2, P3 and P4 of the four crystal planes are defined as follows.

P1: Intensity value of the peak top of a peak in the region of 2θ = 7.0 deg to 9.2 deg.

P2: Intensity value of the peak top of a peak at 2θ = 9.2 deg to 10.6 deg.

P3: Intensity value of the peak top of a peak at 2θ = 10.6 deg to 12.0 deg.

P4: Intensity value of the peak top of a peak at 2θ = 12.0 deg to 14.0 deg.

The crystallinity degree C is defined as C = (P1+P2+P3+P4)/A, and

The degree of orientation D is defined as D = P2/P4.

<Measurement of sealing strength to metal terminal (initial)>

The sealing strength of the adhesive film of each of Examples 1 to 7 and Comparative Example 1 to the metal terminal (initial) was measured by the following method. The results are shown in Table 1. As a metal terminal, aluminum (JIS H 4160: 1994 A 8079 H-O) having a length of 50 mm, a width of 22.5 mm and a thickness of 0.4 mm was provided. Each of the adhesive films for metal terminal, which had been obtained in examples and comparative examples, was cut to a length of 45 mm and a width of 10 mm. Next, the adhesive film for metal terminal was placed on the metal terminal to obtain a laminate of a metal terminal and an adhesive film. Here, the lamination was performed in such a manner that the longitudinal direction and the lateral direction of the metal terminal coincided with the length direction and the width direction of the adhesive film for metal terminal, respectively, and the centers of the metal terminal and the adhesive film for metal terminal coincided with each other. In addition, the resin layer A of the adhesive film for metal terminal is disposed on the metal terminal side. Next, with a polytetrafluoroethylene film (PTFE film, thickness 100 μm) placed on the adhesive film for metal terminal of the laminate (with the PTFE film covering a surface of the adhesive film for metal terminal), the laminate was put on a pressing machine heated to 200°C (the metal terminal is on the hot plate side), a silicone sponge sheet was put thereon, and the laminate was left standing at a pressure of 0.25 MPa for 16 seconds to heat-seal the adhesive film to the metal terminal. The laminate after heat-sealing was naturally cooled to 25°C. Next, the adhesive film for metal terminal was peeled off from the metal terminal in an environment at 25°C using Tensilon Versatile Material Tester (RTG-1210 manufactured by A&D Company, Limited). The maximum strength during the peeling was defined as adhesion strength to the metal terminal (N/15 mm). Note that the adhesion strength (N/15 mm) is a value calculated from the adhesion strength (N/15 mm) measured for a 10 mm-wide adhesive film for metal terminal. The peeling speed was 50 mm/min, the peeling angle was 180°, and the distance between chucks was 30 mm. An average of the values of three measurements was adopted. The results are shown in Table 1. The treatment in which the laminate is left standing for 16 seconds in a heating and pressurizing environment at a temperature of 200°C and a surface pressure of 0.25 MPa simulates heat and pressure applied in the temporary bonding step and the primary bonding step.

<Measurement of sealing strength to metal terminal (after immersion in electrolytic solution)>

The sealing strength of the adhesive film of each of Examples 1 to 7 and Comparative Example 1 to the metal terminal (after immersion in electrolytic solution) was measured by the following method. The results are shown in Table 1. As a metal terminal, aluminum (JIS H 4160: 1994 A 8079 H-O) having a length of 50 mm, a width of 22.5 mm and a thickness of 0.4 mm was provided. Each of the adhesive films for metal terminal, which had been obtained in examples and comparative examples, was cut to a length of 45 mm and a width of 10 mm. Next, the adhesive film for metal terminal was placed on the metal terminal to obtain a laminate of a metal terminal and an adhesive film. Here, the lamination was performed in such a manner that the longitudinal direction and the lateral direction of the metal terminal coincided with the length direction and the width direction of the adhesive film for metal terminal, respectively, and the centers of the metal terminal and the adhesive film for metal terminal coincided with each other. In addition, the resin layer A of the adhesive film for metal terminal is disposed on the metal terminal side. Next, with a polytetrafluoroethylene film (PTFE film, thickness 100 μm) placed on the adhesive film for metal terminal of the laminate (with the PTFE film covering a surface of the adhesive film for metal terminal), the laminate was put on a pressing machine heated to 200°C (the metal terminal is on the hot plate side), a silicone sponge sheet was put thereon, and the laminate was left standing at a pressure of 0.25 MPa for 16 seconds to heat-seal the adhesive film to the metal terminal. The laminate after heat-sealing was naturally cooled to 25°C. Next, the obtained laminate was put in a 100 mL plastic bottle, and 100 g of an electrolytic solution (EC (ethylene carbonate)/DMC (dimethyl carbonate)/DEC (diethyl carbonate) = 1 : 1 : 1) and 1000ppm of pure water were mixed in the plastic bottle, which was tightly sealed. The sealed container was put in an oven at 85°C, taken out after 24 hours, the electrolytic solution was washed off with water, and the obtained laminate was left standing for 30 minutes for natural drying. Next, the adhesive film for metal terminal was peeled off from the metal terminal in an environment at 25°C using Tensilon Versatile Material Tester (RTG-1210 manufactured by A&D Company, Limited). The maximum strength during the peeling was defined as adhesion

strength to the metal terminal (N/15 mm). The peeling speed was 50 mm/min, the peeling angle was 180°, and the distance between chucks was 30 mm.

An average of the values of three measurements was adopted. The results are shown in Table 1. The treatment in which the laminate is left standing for 16 seconds in a heating and pressurizing environment at a temperature of 200°C and a surface pressure of 0.25 MPa simulates heat and pressure applied in the temporary bonding step and the primary bonding step.

<Ten-point average roughness of surface of outermost layer of adhesive film>

The ten-point average roughness of the surface of the resin layer A of the adhesive films for metal terminal which were obtained in each of Examples 1 to 7 and Comparative Example 1 was measured by a method in accordance with the provisions of JIS B 0601: 1994. The measurement was performed under conditions of a measurement rate of 0.5 mm and range AUTO using a small surface roughness measuring machine SURFTEST SJ-210 manufactured by Mitutoyo Corporation. The results showed that the ten-point average roughness was 0.34 μm in Example 1, 0.90 μm in Example 2, 0.26 μm in Example 3, 0.24 μm in Example 4, 0.35 μm in Example 5, 0.35 μm in Example 6, 0.35 μm in Example 7, and 0.40 μm in Comparative Example 1.

<Measurement of heat shrinkage ratio (%)>

The adhesive film for metal terminal was cut to 110 mm in length (MD) × 10 mm in width (TD) to obtain a test piece. Next, the length M (mm) of the test piece was measured with a metal scale. Next, an end part (about 10 mm) of the test piece in the length direction was fixed to a wire mesh with a tape, so that the test piece was suspended from the wire mesh. In this state, the test piece was placed for 120 seconds in an oven heated to 190°C, and was then taken out together with the wire mesh, and naturally cooled in an environment at room temperature (25°C). Next, the length N (mm) of the test piece naturally cooled to room temperature was measured with a metal scale. The heat shrinkage ratio of the adhesive film for metal terminal was calculated from the following equation.

$$\text{Heat shrinkage ratio (\%)} = (1 - (\text{length N}/\text{length M})) \times 100$$

[Table 1]

| Table 1 | Adhesive film for metal terminal | | | | | | | |
|---|---|---|---|---|---|---|---|---|
| | Resin layer A forming one surface (after heating) | | | Intermediate layer | Total layer | Sealing strength to metal terminal (N/15 mm) | | Heat shrinkage ratio |
| | Crystallinity degree (XRD) | Degree of uneven distribution of proportions of island portions | Degree of orientation | Crystallinity degree (XRD) | Crystallinity degree (DSC) | Initial | After immersion in electrolytic solution | % |
| Example 1 | 13.5 | 0.20 | 1.64 | 16.0 | 65.2 | 42.0 | 36.0 | 25 |
| Example 2 | 12.2 | 0.20 | 1.33 | 9.9 | 70.5 | 40.0 | 33.2 | 54 |
| Example 3 | 12.6 | 0.17 | 1.26 | 18.4 | 50.7 | 41.0 | 33.5 | 23 |
| Example 4 | 14.2 | 0.90 | 1.60 | 7.2 | 49.3 | 45.0 | 26.3 | 20 |
| Example 5 | 18.6 | 0.20 | 1.63 | 16.5 | 73.7 | 50.2 | 38.1 | 15 |
| Example 6 | 20.3 | 0.20 | 1.62 | 16.2 | 68.2 | 49.2 | 37.6 | 15 |
| Example 7 | 20.3 | 0.20 | 1.59 | 16.5 | 75.0 | 50.1 | 37.9 | 14 |
| Comparative Example 1 | 10.1 | 0.30 | 1.04 | - | 45.7 | 33.0 | 9.8 | 65 |

As described above, the present disclosure provides inventions of aspects as described below.
Item 1. An adhesive film for metal terminal, which is interposed between a metal terminal electrically connected to an electrode of an electrical storage device element and an exterior material for electrical storage devices which seals the electrical storage device element, and in which a resin layer A forming at least one surface of the adhesive film for metal terminal contains an acid-modified polyolefin, and the resin layer A after the adhesive film for metal terminal is heated at 200°C and 0.25 MPa for 16 seconds has a crystallinity degree of 11 or more as measured under the following conditions using an X-ray diffractometer.

(Measurement conditions)

· The angle of X-ray irradiation is 0.09° with respect to the surface (0°) of the resin layer A.
· The measurement range is 5 μm in depth from the surface of the resin layer A.
· The camera length of an X-ray detector is 500 mm; the X-ray wavelength is 0.92 Å; and the exposure time is 30 seconds.

Item 2. The adhesive film for metal terminal according to item 1, in which a peak derived from maleic anhydride is detected when the resin layer A is analyzed by infrared spectroscopy.
Item 3. The adhesive film for metal terminal according to item 1 or 2, in which in the resin layer A, a degree of uneven distribution of proportions of island portions in a sea-island structure is 1.0 or less.
Item 4. The adhesive film for metal terminal according to any one of items 1 to 3, in which in the resin layer A, a degree of orientation after the heating is 1.0 or more.
Item 5. The adhesive film for metal terminal according to any one of items 1 to 4, in which the adhesive film for metal terminal is formed of a polyolefin-based resin.
Item 6. The adhesive film for metal terminal according to any one of items 1 to 5, including a laminate including a first resin layer disposed on the metal terminal side, an intermediate layer, and a second resin layer disposed on the side of the exterior material for electrical storage devices, in the stated order, in which the first resin layer is the resin layer A.
Item 7. The adhesive film for metal terminal according to item 6, in which the intermediate layer has a crystallinity degree of 7.0 or more as measured under the following conditions using an X-ray diffractometer.

· The angle of X-ray irradiation is set to 0.19 ° and 0.22 ° with respect to the surface (0°) of the intermediate layer.
· The camera length of an X-ray detector is 500 mm; the X-ray wavelength is 0.92 Å; and the exposure time is 30 seconds.

Item 8. A method for manufacturing an adhesive film for metal terminal, which is interposed between a metal terminal electrically connected to an electrode of an electrical storage device element and an exterior material for electrical storage devices which seals the electrical storage device element, and in which a resin layer A forming at least one surface of the adhesive film for metal terminal contains an acid-modified polyolefin, and the resin layer A after the adhesive film for metal terminal is heated at 200°C and 0.25 MPa for 16 seconds has a crystallinity degree of 11 or more as measured under the following conditions using an X-ray diffractometer.

(Measurement conditions)

· The angle of X-ray irradiation is 0.09° with respect to the surface (0°) of the resin layer A.
· The measurement range is 5 μm in depth from the surface of the resin layer A.
· The camera length of an X-ray detector is 500 mm; the X-ray wavelength is 0.92 Å; and the exposure time is 30 seconds.

Item 9. A metal terminal with an adhesive film for metal terminal in which the adhesive film for metal terminal according to any one of items 1 to 7 is attached to a metal terminal.
Item 10. An electrical storage device including: an electrical storage device element including at least a positive electrode, a negative electrode, and an electrolyte; an exterior material for electrical storage devices which seals the electrical storage device element; and the metal terminal electrically connected to each of the positive electrode and the negative electrode and protruding to outside of the exterior material for electrical storage devices, in which

an adhesive film for metal terminal is interposed between the metal terminal and the exterior material for electrical storage devices, and

the resin layer A of the adhesive film for metal terminal has a crystallinity degree of 11 or more as measured under the following conditions using an X-ray diffractometer.

(Measurement conditions)

· The angle of X-ray irradiation is 0.09° with respect to the surface (0°) of the resin layer A.
· The measurement range is 5 μm in depth from the surface of the resin layer A.
· R-AXIS is used as a detector; and the camera length is 500 mm, the X-ray wavelength is 0.92 Å, and the exposure time is 30 seconds.

Item 11. A method for manufacturing an electrical storage device including an electrical storage device element including at least a positive electrode, a negative electrode, and an electrolyte; the exterior material for electrical storage devices which seals the electrical storage device element; and the metal terminal electrically connected to each of the positive electrode and the negative electrode and protruding to outside of the exterior material for electrical storage devices,
the method including a step of interposing the adhesive film for metal terminal according to any one of items 1 to 7 between the metal terminal and the exterior material for electrical storage devices, and sealing the electrical storage device element with the exterior material for electrical storage devices.

Item 12. An exterior material for electrical storage devices which is used for an electrical storage device,

the electrical storage device including: an electrical storage device element including at least a positive electrode, a negative electrode, and an electrolyte; an exterior material for electrical storage devices which seals the electrical storage device element; and a metal terminal electrically connected to each of the positive electrode and the negative electrode and protruding to outside of the exterior material for electrical storage devices, in which

an adhesive film for metal terminal is interposed between the metal terminal and the exterior material for electrical storage devices,

the adhesive film for metal terminal is the adhesive film for metal terminal according to any one of items 1 to 7, and the exterior material for electrical storage devices includes a laminate including at least a base material layer, a barrier layer, and a heat-sealable resin layer.

Item 13. A kit including an exterior material for electrical storage devices which is used for an electrical storage device, and the adhesive film for metal terminal according to any one of items 1 to 7,

the electrical storage device including an electrical storage device element including at least a positive electrode, a negative electrode, and an electrolyte; an exterior material for electrical storage devices which seals the electrical storage device element; and the metal terminal electrically connected to each of the positive electrode and the negative electrode and protruding to outside of the exterior material for electrical storage devices,

the kit being used with the adhesive film for metal terminal being interposed between the metal terminal and the exterior material for electrical storage devices. Reference Signs List

1 Adhesive film for metal terminal
2 Metal terminal
3 Exterior material for electrical storage devices
3a Peripheral edge portion of exterior material for electrical storage devices
4 Electrical storage device element
10 Electrical storage device
11 Intermediate layer
12a First resin layer
12b Second resin layer
31 Base material layer
32 Adhesive agent layer
33 Barrier layer

34 Adhesive layer
35 Heat-sealable resin layer

## Claims

1. An adhesive film for metal terminal, which is interposed between a metal terminal electrically connected to an electrode of an electrical storage device element and an exterior material for electrical storage devices which seals the electrical storage device element, wherein a resin layer A forming at least one surface of the adhesive film for metal terminal contains an acid-modified polyolefin, and the resin layer A after the adhesive film for metal terminal is heated at 200°C and 0.25 MPa for 16 seconds has a crystallinity degree of 11 or more as measured under the following conditions using an X-ray diffractometer.
(Measurement conditions)

    · The angle of X-ray irradiation is 0.09° with respect to the surface (0°) of the resin layer A.
    · The measurement range is 5 μm in depth from the surface of the resin layer A.
    · The camera length of an X-ray detector is 500 mm; the X-ray wavelength is 0.92 Å; and the exposure time is 30 seconds.

2. The adhesive film for metal terminal according to claim 1, wherein a peak derived from maleic anhydride is detected when the resin layer A is analyzed by infrared spectroscopy.

3. The adhesive film for metal terminal according to claim 1 or 2, wherein in the resin layer A, a degree of uneven distribution of proportions of island portions in a sea-island structure is 2.0 or less.

4. The adhesive film for metal terminal according to claim 1 or 2, wherein in the resin layer A, a degree of orientation after the heating is 1.0 or more.

5. The adhesive film for metal terminal according to claim 1 or 2, wherein the adhesive film for metal terminal is formed of a polyolefin-based resin.

6. The adhesive film for metal terminal according to claim 1 or 2, comprising a laminate including a first resin layer disposed on the metal terminal side, an intermediate layer, and a second resin layer disposed on the side of the exterior material for electrical storage devices, in the stated order, wherein the first resin layer is the resin layer A.

7. The adhesive film for metal terminal according to claim 6, wherein the intermediate layer has a crystallinity degree of 7.0 or more as measured under the following conditions using an X-ray diffractometer.

    · The angle of X-ray irradiation is set to 0.19 ° and 0.22 ° with respect to the surface (0°) of the intermediate layer.
    · The camera length of an X-ray detector is 500 mm; the X-ray wavelength is 0.92 Å; and the exposure time is 30 seconds.

8. A method for manufacturing an adhesive film for metal terminal, which is interposed between a metal terminal electrically connected to an electrode of an electrical storage device element and an exterior material for electrical storage devices which seals the electrical storage device element, and in which a resin layer A forming at least one surface of the adhesive film for metal terminal contains an acid-modified polyolefin, and the resin layer A after the adhesive film for metal terminal is heated at 200°C and 0.25 MPa for 16 seconds has a crystallinity degree of 11 or more as measured under the following conditions using an X-ray diffractometer.
(Measurement conditions)

    · The angle of X-ray irradiation is 0.09° with respect to the surface (0°) of the resin layer A.
    · The measurement range is 5 μm in depth from the surface of the resin layer A.
    · The camera length of an X-ray detector is 500 mm; the X-ray wavelength is 0.92 Å; and the exposure time is 30 seconds.

9. A metal terminal with adhesive film for metal terminal, wherein the adhesive film for metal terminal according to claim 1 or 2 is attached to the metal terminal.

**10.** An electrical storage device comprising: an electrical storage device element including at least a positive electrode, a negative electrode, and an electrolyte; an exterior material for electrical storage devices which seals the electrical storage device element; and a metal terminal electrically connected to each of the positive electrode and the negative electrode and protruding to outside of the exterior material for electrical storage devices, wherein

an adhesive film for metal terminal is interposed between the metal terminal and the exterior material for electrical storage devices, and
the resin layer A of the adhesive film for metal terminal has a crystallinity degree of 11 or more as measured under the following conditions using an X-ray diffractometer.

(Measurement conditions)

· The angle of X-ray irradiation is 0.09° with respect to the surface (0°) of the resin layer A.
· The measurement range is 5 μm in depth from the surface of the resin layer A.
· R-AXIS is used as a detector; and the camera length is 500 mm, the X-ray wavelength is 0.92 Å, and the exposure time is 30 seconds.

**11.** A method for manufacturing an electrical storage device including an electrical storage device element including at least a positive electrode, a negative electrode, and an electrolyte; the exterior material for electrical storage devices which seals the electrical storage device element; and the metal terminal electrically connected to each of the positive electrode and the negative electrode and protruding to outside of the exterior material for electrical storage devices, the method comprising a step of interposing the adhesive film for metal terminal according to claim 1 or 2 between the metal terminal and the exterior material for electrical storage devices, and sealing the electrical storage device element with the exterior material for electrical storage devices.

**12.** An exterior material for electrical storage devices which is used for an electrical storage device,

the electrical storage device including: an electrical storage device element including at least a positive electrode, a negative electrode, and an electrolyte; an exterior material for electrical storage devices which seals the electrical storage device element; and a metal terminal electrically connected to each of the positive electrode and the negative electrode and protruding to outside of the exterior material for electrical storage devices, wherein an adhesive film for metal terminal is interposed between the metal terminal and the exterior material for electrical storage devices,
the adhesive film for metal terminal is the adhesive film for metal terminal according to claim 1 or 2, and
the exterior material for electrical storage devices includes a laminate including at least a base material layer, a barrier layer, and a heat-sealable resin layer.

**13.** A kit comprising an exterior material for electrical storage devices which is used for an electrical storage device, and the adhesive film for metal terminal according to claim 1 or 2,

the electrical storage device including an electrical storage device element including at least a positive electrode, a negative electrode, and an electrolyte; an exterior material for electrical storage devices which seals the electrical storage device element; and the metal terminal electrically connected to each of the positive electrode and the negative electrode and protruding to outside of the exterior material for electrical storage devices,
the kit being used with the adhesive film for metal terminal being interposed between the metal terminal and the exterior material for electrical storage devices.

FIG. 1

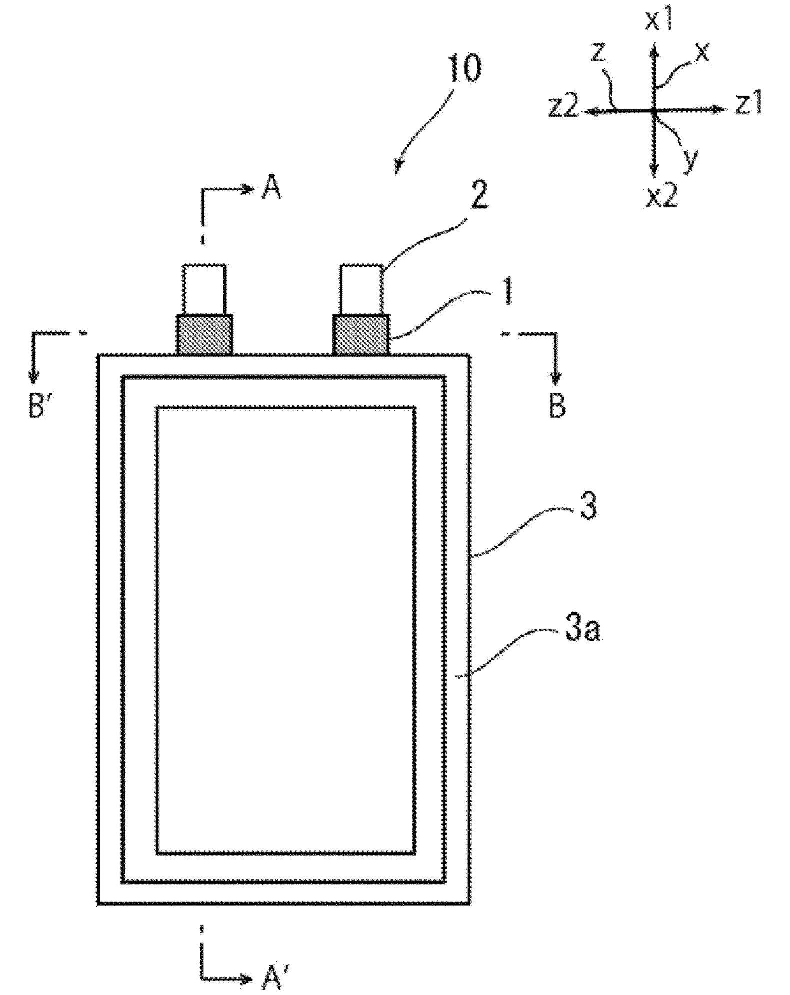


FIG. 2

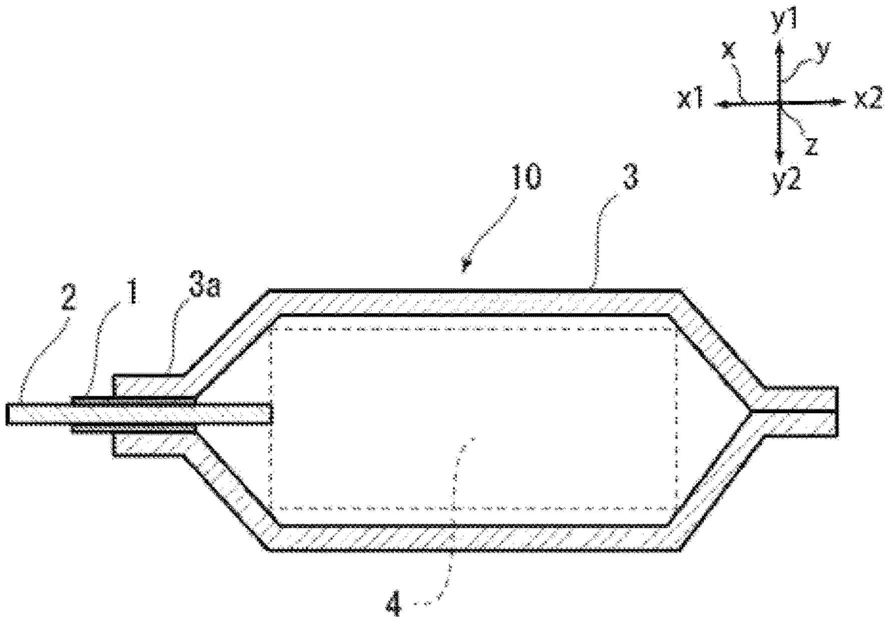

FIG. 3

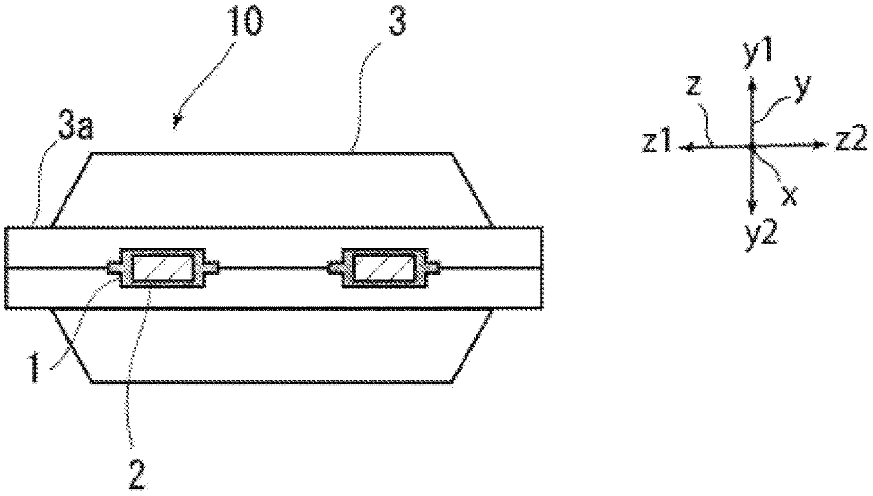


FIG. 4

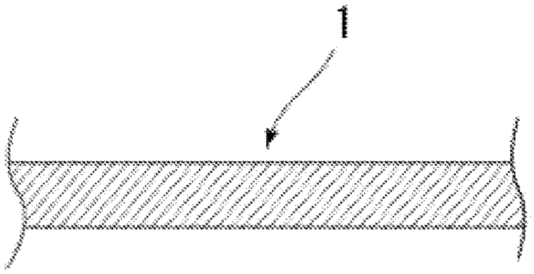


FIG. 5

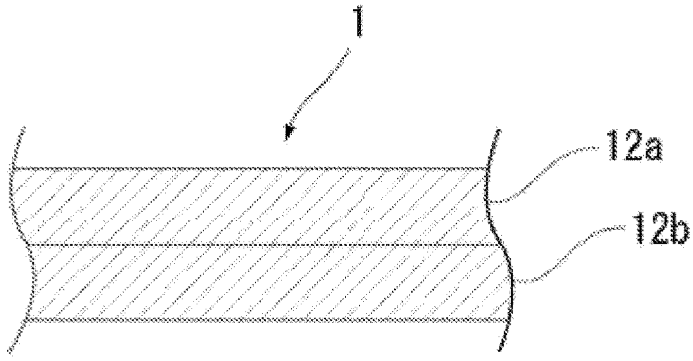


FIG. 6

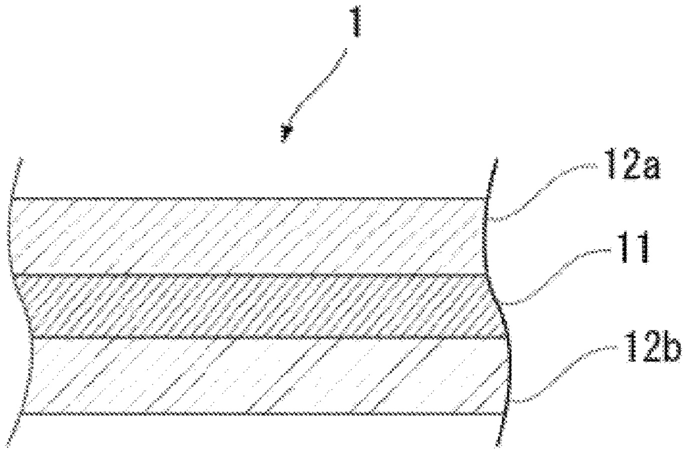

FIG. 7

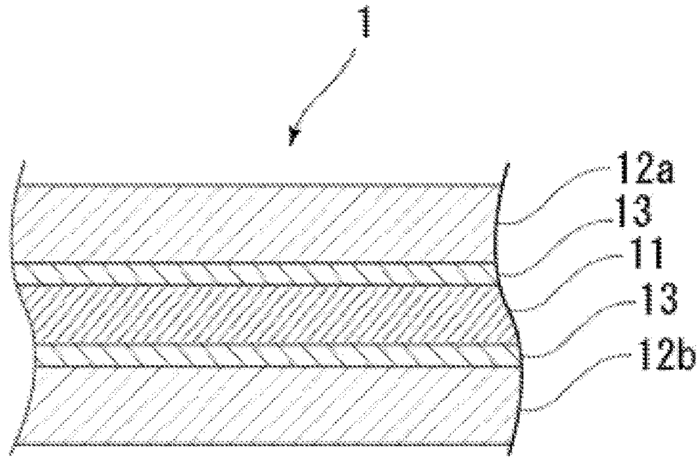


FIG. 8

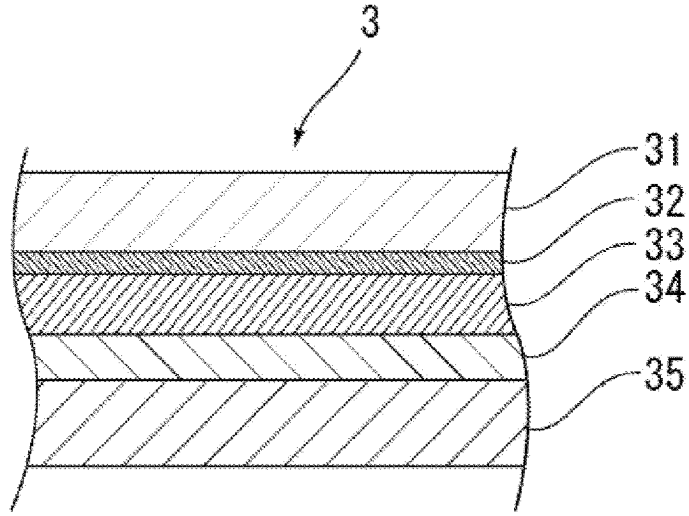

**INTERNATIONAL SEARCH REPORT**

International application No. **PCT/JP2023/016974**

**A. CLASSIFICATION OF SUBJECT MATTER**

***H01M 50/198***(2021.01)i; ***H01M 50/105***(2021.01)i; ***H01M 50/129***(2021.01)i; ***H01M 50/178***(2021.01)i; ***H01M 50/184***(2021.01)i; ***H01M 50/193***(2021.01)i; ***H01M 50/197***(2021.01)i
FI: H01M50/198; H01M50/105; H01M50/129; H01M50/178; H01M50/184 C; H01M50/193; H01M50/197

According to International Patent Classification (IPC) or to both national classification and IPC

**B. FIELDS SEARCHED**

Minimum documentation searched (classification system followed by classification symbols)

H01M50/198; H01M50/105; H01M50/129; H01M50/178; H01M50/184; H01M50/193; H01M50/197

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-153057 A (DAINIPPON PRINTING CO., LTD.) 30 September 2021 (2021-09-30) paragraphs [0018], [0027]-[0030], [0035], [0045], [0076] | 1-13 |
| A | JP 2021-012877 A (DAINIPPON PRINTING CO., LTD.) 04 February 2021 (2021-02-04) | 1-13 |
| A | JP 2021-108287 A (TOPPAN PRINTING CO., LTD.) 29 July 2021 (2021-07-29) | 1–13 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/016974**

| Patent document cited in search report | Publication date (day/month/year) | Patent family member(s) | Publication date (day/month/year) |
|---|---|---|---|
| JP 2021-153057 A | 30 September 2021 | US 2022/0352609 A1<br>paragraphs [0047], [0057]-[0060], [0072], [0083], [0116], [0117]<br>WO 2021/090952 A1<br>CN 114667633 A<br>KR 10-2022-0097873 A | |
| JP 2021-012877 A | 04 February 2021 | WO 2020/085464 A1 | |
| JP 2021-108287 A | 29 July 2021 | JP 2018-60758 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015079638 A